(19) Europäisches Patentamt / European Patent Office / Office européen des brevets

(11) **EP 4 178 279 A1**

(12) **EUROPEAN PATENT APPLICATION**

(43) Date of publication:
**10.05.2023 Bulletin 2023/19**

(21) Application number: **21206801.9**

(22) Date of filing: **05.11.2021**

(51) International Patent Classification (IPC):
**H04W 56/00** (2009.01)

(52) Cooperative Patent Classification (CPC):
**H04W 56/0045; H04B 7/1851**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Panasonic Intellectual Property Corporation of America**
**Torrance, CA 90504 (US)**

(72) Inventors:
• **KLENNER, Peter**
  **63225 Langen (DE)**
• **NISHIO, Akihiko**
  **Osaka, 571-8501 (JP)**
• **SUZUKI, Hidetoshi**
  **Osaka, 571-8501 (JP)**

(74) Representative: **Grünecker Patent- und Rechtsanwälte**
**PartG mbB**
**Leopoldstraße 4**
**80802 München (DE)**

(54) **COMMON TIMING ADVANCE DETERMINATION FOR A NON-TERRESTRIAL NETWORK**

(57) The present disclosure relates to a network node and a user device, as well as to methods for execution on a network node, a user device or on integrated circuitry for determining of a common timing advance component for a non-terrestrial network. In particular, for a validity interval, coefficients of a polynomial are determined which are approximating a timing advance component between the network node and a satellite, so as to minimize an approximation error, wherein the approximation error is specified in a plurality of time instances of the validity interval relative to a reference time instance. The coefficients are provided from a network node to user device and used to approximate the timing advance.

Fig. 8

**Description**

**1. Technical Field**

The present invention relates to timing advance determination in a non-terrestrial network. In particular, the present invention relates to apparatuses and methods that compute, signal, and/or utilize the determined timing advance.

**2. Description of the Related Art**

Currently, the 3rd Generation Partnership Project (3GPP) works at the technical specifications for the next generation cellular technology, which is also called fifth generation (5G).

One objective is to provide a single technical framework addressing all usage scenarios, requirements and deployment scenarios (see e.g. section 6 of 3GGP TR 38.913 version 16.0.0), at least including enhanced mobile broadband (eMBB), ultra-reliable low-latency communications (URLLC), and massive machine type communication (mMTC). For example, eMBB deployment scenarios may include indoor hotspot, dense urban, rural, urban macro and high speed; URLLC deployment scenarios may include industrial control systems, mobile health care (remote monitoring, diagnosis and treatment), real time control of vehicles, wide area monitoring and control systems for smart grids; mMTC deployment scenarios may include scenarios with large number of devices with non-time critical data transfers such as smart wearables and sensor networks. The services eMBB and URLLC are similar in that they both demand a very broad bandwidth, however are different in that the URLLC service may preferably require ultra-low latencies.

A second objective is to achieve forward compatibility. Backward compatibility to Long Term Evolution (LTE, LTE-A) cellular systems is not required, which facilitates a completely new system design and/or the introduction of novel features.

One notable feature of 5G is introduction of non-terrestrial network (NTN) including a satellite in communication path between a user device and a network.

SUMMARY

One non-limiting and exemplary embodiment facilitates an efficient computation of common timing advance (component of timing advance between a satellite and a network node).

In an embodiment, the techniques disclosed herein feature a network node, comprising processing circuitry which, in operation, for a validity interval, determines coefficients of a polynomial approximating a timing advance component between the network node and a satellite so as to minimize an approximation error. The approximation error is specified in a plurality of time instances of the validity interval relative to a reference time instance. The network node further comprises a transceiver which, in operation, transmits said coefficients.

It should be noted that general or specific embodiments may be implemented as a system, a method, an integrated circuit, a computer program, a storage medium, or any selective combination thereof.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

**BRIEF DESCRIPTION OF THE FIGURES**

In the following exemplary embodiments are described in more detail with reference to the attached figures and drawings.

**Fig. 1**   shows an exemplary architecture for a 3GPP NR system.

**Fig. 2**   is a schematic drawing that shows a functional split between NG-RAN and 5GC.

**Fig. 3**   is a sequence diagram for RRC connection setup/reconfiguration procedures.

**Fig. 4**   is a schematic drawing showing usage scenarios of Enhanced mobile broadband (eMBB), Massive Machine Type Communications (mMTC) and Ultra Reliable and Low Latency Communications (URLLC).

**Fig. 5**   is a block diagram showing an exemplary 5G system architecture for a non-roaming scenario.

Fig. 6      illustrates an exemplary NG RAN architecture based on a transparent satellite.

Fig. 7      illustrates an exemplary NG RAN architecture based on a regenerative satellite.

Fig. 8      illustrates an exemplary scenario where several UEs are served by a satellite.

Fig. 9A      illustrates exemplary approximations of a parabolic function by first grade polynomial obtained as Taylor series and obtained in accordance with an embodiment.

Fig. 9B      illustrates an approximation error for the approximations of Fig. 9A.

Fig. 10      illustrates an exemplary and simplified structure of a UE and a network node.

Fig. 11      illustrates exemplary timing of uplink and downlink including timing advance in an NTN network.

Fig. 12      is a schematic drawing that illustrates determination of reference time instance based on system timing.

Fig. 13      is a flow diagram exemplifying the processing chain at the user device to acquire timing advance in an NTN network.

Fig. 14      is a schematic drawing illustrating an example of transmitting common TA approximation coefficients with repetitions and more frequently than the updating these common TA approximation coefficients.

Fig. 15      is a schematic drawing illustrating an example of transmitting common TA approximation coefficients with the same frequency as updating these common TA approximation coefficients.

Fig. 16      is a schematic drawing illustrating an example of transmitting common TA approximation coefficients without repetitions and more frequently than the updating these common TA approximation coefficients.

Fig. 17      illustrates an exemplary scenario case 1 for which the common TA determination is evaluated.

Fig. 18      illustrates an exemplary scenario case 2 for which the common TA determination is evaluated.

Fig. 19A      shows results in term of approximation error for case 1 and linear approximation polynomial.

Fig. 19B      shows results in term of approximation error for case 1 and quadratic approximation polynomial.

Fig. 19C      shows results in term of approximation error for case 2 and linear approximation polynomial.

Fig. 19D      shows results in term of approximation error for case 2 and quadratic approximation polynomial.

DETAILED DESCRIPTION

*5G NR system architecture and protocol stacks*

3GPP has been working at the next release for the 5th generation cellular technology, simply called 5G, including the development of a new radio access technology (NR) operating in frequencies ranging up to 100 GHz. The first version of the 5G standard was completed at the end of 2017, which allows proceeding to 5G NR standard-compliant trials and commercial deployments of smartphones.

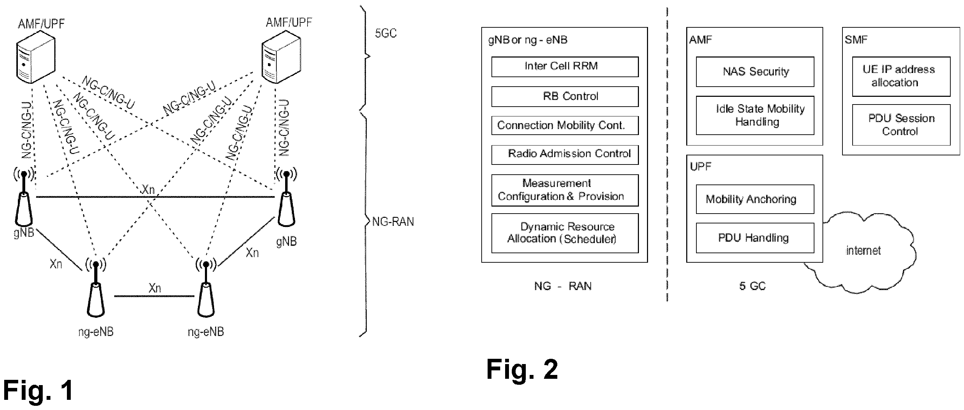

Among other things, the overall system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in **Fig. 1** (see e.g. 3GPP TS 38.300 v16.3.0, section 4).

The user plane protocol stack for NR (see e.g. 3GPP TS 38.300, section 4.4.1) comprises the PDCP (Packet Data Convergence Protocol, see section 6.4 of TS 38.300), RLC (Radio Link Control, see section 6.3 of TS 38.300) and MAC (Medium Access Control, see section 6.2 of TS 38.300) sublayers, which are terminated in the gNB on the network side. Additionally, a new access stratum (AS) sublayer (SDAP, Service Data Adaptation Protocol) is introduced above PDCP (see e.g. sub-clause 6.5 of 3GPP TS 38.300). A control plane protocol stack is also defined for NR (see for instance TS 38.300, section 4.4.2). An overview of the Layer 2 functions is given in sub-clause 6 of TS 38.300. The functions of the RRC layer are listed in sub-clause 7 of TS 38.300.

For instance, the Medium-Access-Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. It also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. For instance, the physical channels are PRACH (Physical Random Access Channel), PUSCH (Physical Uplink Shared Channel) and PUCCH (Physical Uplink Control Channel) for uplink and PDSCH (Physical Downlink Shared Channel), PDCCH (Physical Downlink Control Channel) and PBCH (Physical Broadcast Channel) for downlink.

Use cases / deployment scenarios for NR could include enhanced mobile broadband (eMBB), ultra-reliable low-latency communications (URLLC), massive machine type communication (mMTC), which have diverse requirements in terms of data rates, latency, and coverage. For example, eMBB is expected to support peak data rates (20Gbps for downlink and 10Gbps for uplink) and user-experienced data rates in the order of three times what is offered by IMT-Advanced. On the other hand, in case of URLLC, the tighter requirements are put on ultra-low latency (0.5ms for UL and DL each for user plane latency) and high reliability ($1-10^{-5}$ within 1ms). Finally, mMTC may preferably require high connection density (1,000,000 devices/km$^2$ in an urban environment), large coverage in harsh environments, and extremely long-life battery for low cost devices (15 years).

Therefore, the OFDM numerology (e.g. subcarrier spacing, OFDM symbol duration, cyclic prefix (CP) duration, number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacing of 15kHz, 30kHz, 60 kHz... are being considered at the moment. The symbol duration $T_u$ and the subcarrier spacing $\Delta f$ are directly related through the formula $\Delta f = 1 / T_u$. In a similar manner as in LTE systems, the term "resource element" can be used to denote a minimum resource unit being composed of one subcarrier for the length of one OFDM/SC-FDMA symbol.

In the new radio system 5G-NR for each numerology and carrier a resource grid of subcarriers and OFDM symbols is defined respectively for uplink and downlink. Each element in the resource grid is called a resource element and is identified based on the frequency index in the frequency domain and the symbol position in the time domain (see 3GPP TS 38.211 v16.3.0, e.g. section 4). For instance, downlink and uplink transmissions are organized into frames with 10ms duration, each frame consisting of ten subframes of respectively 1ms duration. In 5g NR implementations the number of consecutive OFDM symbols per subframe depends on the subcarrier-spacing configuration. For example, for a 15-kHz subcarrier spacing, a subframe has 14 OFDM symbols (similar to an LTE-conformant implementation, assuming a normal cyclic prefix). On the other hand, for a 30-kHz subcarrier spacing, a subframe has two slots, each slot comprising 14 OFDM symbols.

*5G NR functional split between NG-RAN and 5GC*

**Fig. 2** illustrates functional split between NG-RAN and 5GC. NG-RAN logical node is a gNB or ng-eNB. The 5GC has logical nodes AMF, UPF and SMF.

In particular, the gNB and ng-eNB host the following main functions:

- Functions for Radio Resource Management such as Radio Bearer Control, Radio Admission Control, Connection Mobility Control, Dynamic allocation of resources to UEs in both uplink and downlink (scheduling);
- IP header compression, encryption and integrity protection of data;
- Selection of an AMF at UE attachment when no routing to an AMF can be determined from the information provided by the UE;
- Routing of User Plane data towards UPF(s);
- Routing of Control Plane information towards AMF;
- Connection setup and release;

- Scheduling and transmission of paging messages;
- Scheduling and transmission of system broadcast information (originated from theAMF or OAM);
- Measurement and measurement reporting configuration for mobility and scheduling;
- Transport level packet marking in the uplink;
- Session Management;
- Support of Network Slicing;
- QoS Flow management and mapping to data radio bearers;
- Support of UEs in RRC_INACTIVE state;
- Distribution function for NAS messages;
- Radio access network sharing;
- Dual Connectivity;
- Tight interworking between NR and E-UTRA.

The Access and Mobility Management Function (AMF) hosts the following main functions:

- Non-Access Stratum, NAS, signalling termination;
- NAS signalling security;
- Access Stratum, AS, Security control;
- Inter Core Network, CN, node signalling for mobility between 3GPP access networks;
- Idle mode UE Reachability (including control and execution of paging retransmission);
- Registration Area management;
- Support of intra-system and inter-system mobility;
- Access Authentication;
- Access Authorization including check of roaming rights;
- Mobility management control (subscription and policies);
- Support of Network Slicing;
- Session Management Function, SMF, selection.

Furthermore, the User Plane Function, UPF, hosts the following main functions:

- Anchor point for Intra-/Inter-RAT mobility (when applicable);
- External PDU session point of interconnect to Data Network;
- Packet routing & forwarding;
- Packet inspection and User plane part of Policy rule enforcement;
- Traffic usage reporting;
- Uplink classifier to support routing traffic flows to a data network;
- Branching point to support multi-homed PDU session;
- QoS handling for user plane, e.g. packet filtering, gating, UL/DL rate enforcement;
- Uplink Traffic verification (SDF to QoS flow mapping);
- Downlink packet buffering and downlink data notification triggering.

Finally, the Session Management function, SMF, hosts the following main functions:

- Session Management;
- UE IP address allocation and management;
- Selection and control of UP function;
- Configures traffic steering at User Plane Function, UPF, to route traffic to proper destination;
- Control part of policy enforcement and QoS;
- Downlink Data Notification.

*RRC connection setup and reconfiguration procedures*

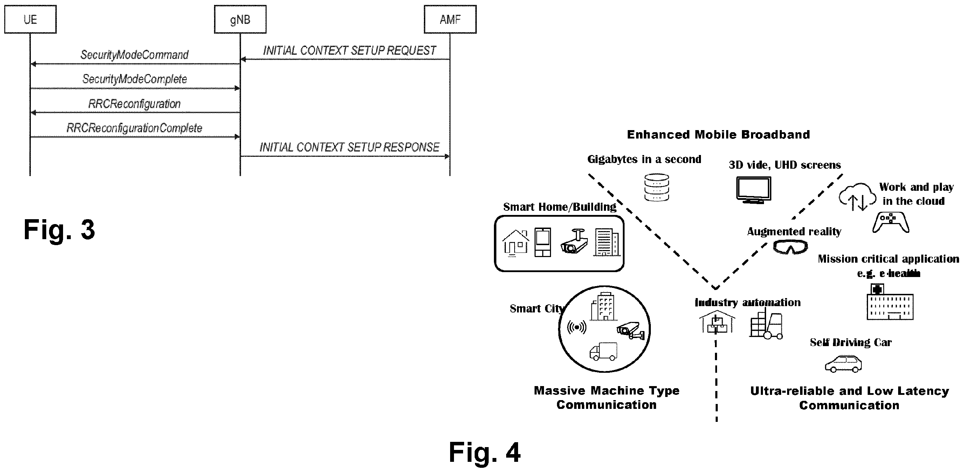

**Fig. 3** illustrates some interactions between a UE, gNB, and AMF (a 5GC entity) in the context of a transition of the UE from RRC_IDLE to RRC_CONNECTED for the NAS part (see TS 38.300).

RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a Security-

ModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for exampleAMF, SMF, etc.) of a 5th Generation Core (5GC) is provided that comprises control circuitry which, in operation, establishes a Next Generation (NG) connection with a gNodeB, and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element (IE) to the UE via the signaling radio bearer. The UE then performs an uplink transmission or a downlink reception based on the resource allocation configuration.

*Usage Scenarios of IMT for 2020 and beyond*

**Fig. 4** illustrates some of the use cases for 5G NR. In 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications. Fig. 4 illustrates some examples of envisioned usage scenarios for IMT for 2020 and beyond (see e.g. ITU-R M.20183 Fig. 2).

The URLLC use case has stringent requirements for capabilities such as throughput, latency and availability and has been envisioned as one of the enablers for future vertical applications such as wireless control of industrial manufacturing or production processes, remote medical surgery, distribution automation in a smart grid, transportation safety, etc. Ultra-reliability for URLLC is to be supported by identifying the techniques to meet the requirements set by TR 38.913 version 16.0.0. For NR URLLC in Release 15, key requirements include a target user plane latency of 0.5 ms for UL (uplink) and 0.5 ms for DL (downlink). The general URLLC requirement for one transmission of a packet is a BLER (block error rate) of 1E-5 for a packet size of 32 bytes with a user plane latency of 1ms.

From the physical layer perspective, reliability can be improved in a number of possible ways. The current scope for improving the reliability involves defining separate CQI tables for URLLC, more compact DCI formats, repetition of PDCCH, etc. However, the scope may widen for achieving ultra-reliability as the NR becomes more stable and developed (for NR URLLC key requirements). Particular use cases of NR URLLC in Rel. 15 include Augmented Reality/Virtual Reality (AR/VR), e-health, e-safety, and mission-critical applications.

Moreover, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. Pre-emption means that a transmission for which resources have already been allocated is stopped, and the already allocated resources are used for another transmission that has been requested later, but has lower latency / higher priority requirements. Accordingly, the already granted transmission is pre-empted by a later transmission. Pre-emption is applicable independent of the particular service type. For example, a transmission for a service-type A (URLLC) may be pre-empted by a transmission for a service type B (such as eMBB).

Technology enhancements with respect to reliability improvement include dedicated CQI/MCS tables for the target BLER of 1E-5.

The use case of mMTC (massive machine type communication) is characterized by a very large number of connected devices typically transmitting a relatively low volume of non-delay sensitive data. Devices are required to be low cost and to have a very long battery life. From NR perspective, utilizing very narrow bandwidth parts is one possible solution to have power saving from UE perspective and enable long battery life.

As mentioned above, it is expected that the scope of reliability in NR becomes wider. One key requirement to all the cases, and especially necessary for URLLC and mMTC, is high reliability or ultra-reliability. Several mechanisms can be considered to improve the reliability from radio perspective and network perspective. In general, there are a few key potential areas that can help improve the reliability. Among these areas are compact control channel information, data/control channel repetition, and diversity with respect to frequency, time and/or the spatial domain. These areas are applicable to reliability in general, regardless of particular communication scenarios.

For NR URLLC, further use cases with tighter requirements have been identified such as factory automation, transport industry and electrical power distribution, including factory automation, transport industry, and electrical power distribution. The tighter requirements are higher reliability (up to $10^6$ level), higher availability, packet sizes of up to 256 bytes, time synchronization down to the order of a few $\mu$s where the value can be one or a few $\mu$s depending on frequency

range and short latency in the order of 0.5 to 1 ms in particular a target user plane latency of 0.5 ms, depending on the use cases.

Moreover, for NR URLLC, several technology enhancements from physical layer perspective have been identified. Among these are PDCCH (Physical Downlink Control Channel) enhancements related to compact DCI, PDCCH repetition, increased PDCCH monitoring. Moreover, UCI (Uplink Control Information) enhancements are related to enhanced HARQ (Hybrid Automatic Repeat Request) and CSI feedback enhancements. Also, PUSCH enhancements related to mini-slot level hopping and retransmission/repetition enhancements have been identified. The term "mini-slot" refers to a Transmission Time Interval (TTI) including a smaller number of symbols than a slot (a slot comprising fourteen symbols).

*QoS control*

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so), e.g. as shown above with reference to Fig. 3. The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

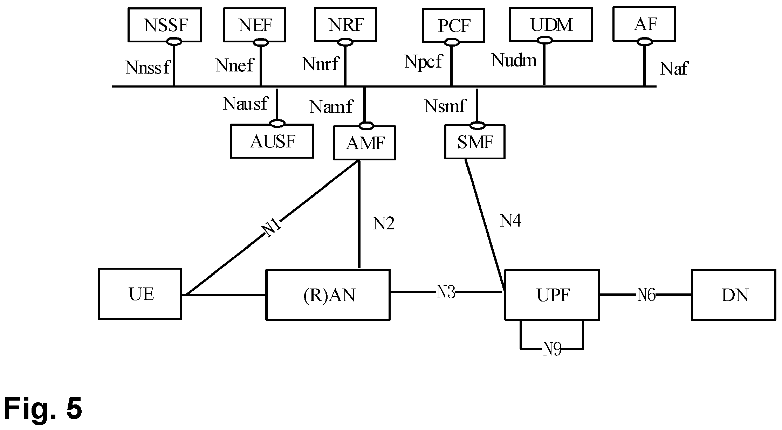

**Fig. 5** illustrates a 5G NR non-roaming reference architecture (see TS 23.501 v16.6.0, section 4.2.3). An Application Function (AF), e.g. an external application server hosting 5G services, exemplarily described in Fig. 4, interacts with the 3GPP Core Network in order to provide services, for example to support application influence on traffic routing, accessing Network Exposure Function (NEF) or interacting with the Policy framework for policy control (see Policy Control Function, PCF), e.g. QoS control. Based on operator deployment, Application Functions considered to be trusted by the operator can be allowed to interact directly with relevant Network Functions. Application Functions not allowed by the operator to access directly the Network Functions use the external exposure framework via the NEF to interact with relevant Network Functions.

Fig. 5 shows further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN), e.g. operator services, Internet access or 3rd party services. All of or a part of the core network functions and the application services may be deployed and running on cloud computing environments.

In the present disclosure, thus, an application server (for example, AF of the 5G architecture), is provided that comprises a transmitter, which, in operation, transmits a request containing a QoS requirement for at least one of URLLC, eMBB and mMTC services to at least one of functions (for example NEF, AMF, SMF, PCF,UPF, etc.) of the 5GC to establish a PDU session including a radio bearer between a gNodeB and a UE in accordance with the QoS requirement and control circuitry, which, in operation, performs the services using the established PDU session.

*System information transmission*

System information is downlink broadcast information transmitted periodically by a base station (gNB in 5G, in general a network node). It includes information for a UE to establish connection with the base station. In 5G, UE reads system information for cell camping when it is powered on, for cell selection and re-selection when it is in RRC_IDLE mode. System information provides all necessary details such as system frame number, system bandwidth, PLMN, cell selection and re-selection thresholds etc. to access the network.

System information is structured in a Master Information Block (MIB) and System Information Blocks (SIBs). SIBs accommodate various information. For the present disclosure of relevance may be information related to NTN transmission as will be described below. The MIB information is transmitted (broadcasted) via BCH and PBCH channels while SIBs are transmitted via DL-SCH and PDSCH channels.

In general, system information may be transmitted periodically (so that the newly connecting terminals may obtain it) or on demand. The periodic schedule of system information transmission is configurable by RRC. In particular, a SIB1 (which is referred to by MIB) carries scheduling information which specifies e.g. the system information window (repetition period of the system information transmission pattern), some transmission parameters (e.g. physical layer parameters) to receive the system information, and the mapping (transmission pattern) of the SIBs within the system information window.

*Non-Terrestrial Networks, NTN*

Thanks to the wide service coverage capabilities and reduced vulnerability of space/airborne vehicles to physical attacks and natural disasters, NTNs may foster the rollout of NR service in unserved areas that cannot be covered by terrestrial NR networks (for instance isolated or remote areas, on board aircraft or vessels) and unserved (for instance suburban and rural areas). Further, NTNs may reinforce NR service reliability by providing service continuity for passengers on moving platforms or ensuring service availability anywhere, especially for critical communication.

The benefits relate to either non-terrestrial networks operating alone or to integrated terrestrial and non-terrestrial networks, which may impact coverage, user bandwidth, system capacity, service reliability or availability.

A non-terrestrial network refers to a network, or segment of networks using RF resources on board of a satellite, for instance. NTNs typically feature the following system elements: an NTN terminal, which may refer to a 3GPP UE or a terminal specific to the satellite system in case a satellite does not serve directly 3GPP UEs; a service link which refers to the radio link between the user equipment and the space/airborne platform; an airborne platform embarking a payload; gateways that connect the space/airborne platform to the core network; feeder links which refer to the radio links between the gateway and space/airborne platform.

In 3GPP, NR-based operation in a non-terrestrial network (NTN) is studied and described (see e.g. 3GPP TR 38.811, Study on New Radio (NR) to support non-terrestrial networks, version 15.4.0, and 3GPP TR 38.821, Solutions for NR to support non-terrestrial networks, version 16.0.0).

A non-terrestrial network (NTN) refers to a network, or segment of networks, using RF resources on board of an airborne or spaceborne entity for transmission, such as e.g.:

- Spaceborne vehicles: Satellites (including Low Earth Orbiting (LEO) satellites, Medium Earth Orbiting (MEO) satellites, Geostationary Earth Orbiting (GEO) satellites as well as Highly Elliptical Orbiting (HEO) satellites)
- Airborne vehicles: High Altitude Platforms (HAPs) encompassing Unmanned Aircraft Systems (UAS) including Lighter than Air UAS (LTA), Heavier than Air UAS (HTA), all operating in altitudes typically between 8 and 50 km, quasi-stationary.

Exemplary, a UAS or satellite platform is connected to the 5G network through one or several gateways linked to the data network. NTNs may comprise the following system elements: an NTN-capable terminal, which may refer to a 3GPP UE or a terminal that is specific to the satellite system in case a satellite does not serve directly 3GPP UEs; a service link which refers to the radio link between the user equipment and the space/airborne platform; an airborne platform embarking a payload; gateways that connect the space/airborne platform to the core network; feeder links which refer to the radio links between the Gateway Center space/airborne platform. The platform can implement either transparent or regenerative payload transmissions, with the following exemplary characteristics.

- In the transparent payload, the platform acts as a repeater by filtering, converting, and amplifying the wave signal, while the payload is unchanged.
- In the regenerative payload, the platform has some or all of the base station functionalities. It may perform demodulation/modulation, switching/routing, coding/decoding in addition to radio frequency filtering, conversion and amplification.
- The Inter-satellite links (ISL) can optionally be used to form a constellation of satellites. ISL (Inter-Satellite Links) is a transport link between satellites.

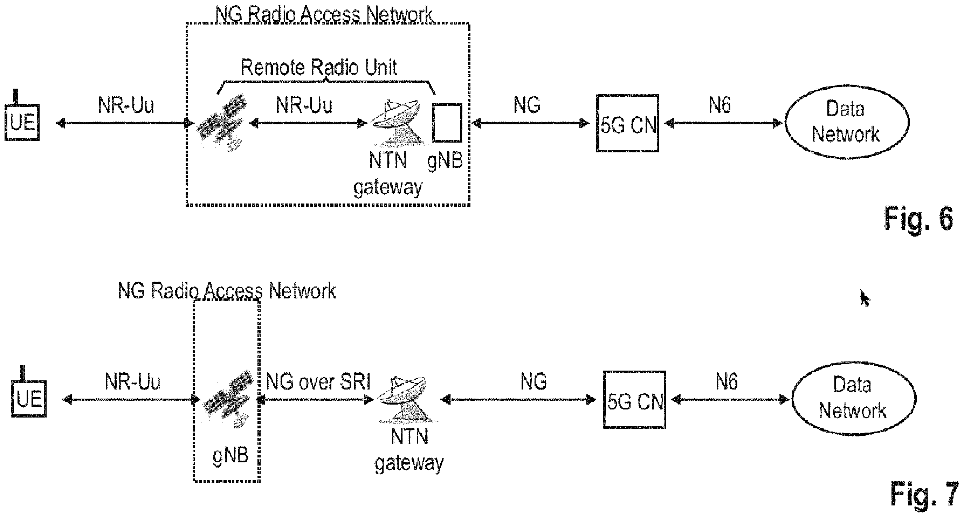

**Fig. 6** illustrates a scenario of a non-terrestrial network, wherein a transmission between a terminal (UE) is performed via a remote radio unit including a satellite and an NTN gateway. A gNB is located at the gateway as a scheduling device. The satellite payload implements frequency conversion and radiofrequency amplifier in both uplink and downlink direction. Hence, the satellite repeats the NR radio interface from the feeder link (between the NTN gateway and the satellite) to the service link (between the satellite and the UE) and vice versa. The Satellite Radio Interface (SRI) on the feeder link is the NR-Uu. In other words, the satellite does not terminate NR-Uu. A satellite in this configuration is referred to as a transparent satellite.

**Fig. 7** illustrates a scenario of a non-terrestrial network, wherein a transmission between a terminal (UE) is performed via a satellite including a gNB as a scheduling device. A satellite in this configuration is referred to as a regenerative satellite. According to one exemplary implementation (see TR 38.321 section 5.2), the NG-RAN logical architecture as described in TS 38.401 is used as baseline for NTN scenarios. The satellite payload implements regeneration of the signals received from Earth. The NR-Uu radio interface is on the service link between the UE and the satellite. The Satellite Radio Interface (SRI) is on the feeder link between the NTN gateway and the satellite. SRI (Satellite Radio Interface) is a transport link between the NTN GW and satellite.

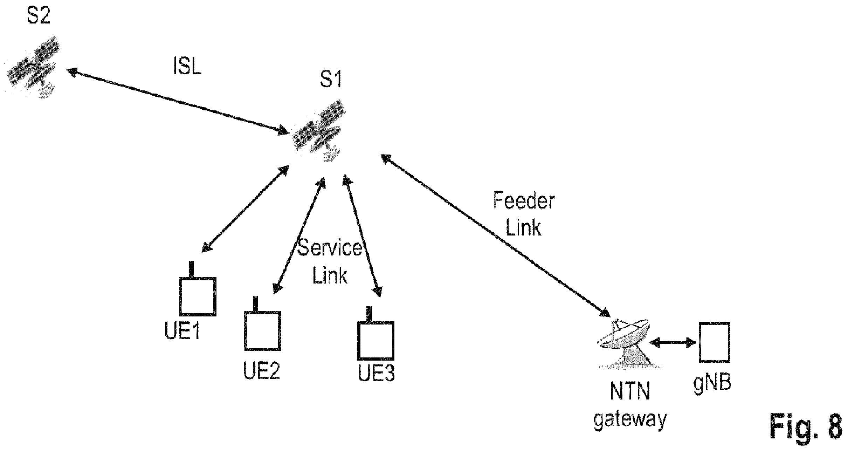

**Fig. 8** illustrates an exemplary scenario where three UEs (UE1, UE2, UE3) are served by a satellite S1. The satellite S1 is communicating via a feeder link with a gNB and NTN gateway as well as via an inter-satellite link (ISL) with another neighbor satellite S2.

There are different types of satellites that provide communications, Low-Earth Orbit (LEO) or Geosynchronous Equatorial Orbit (GEO) (also called geo-stationary) satellites. Geostationary satellites appear fixed as they move at the same angular velocity as the Earth and orbit along a path parallel to Earth's rotation, thereby providing coverage to a specific area. From the ground, GEO satellites appear to be stationary. LEO satellites revolve at an altitude between 160 to 2,000 kilometers (99 to 1,200 miles). A constellation of LEO satellites can provide continuous, global coverage as the satellite moves. Unlike GEO satellites, LEO satellites also fly at a much faster pace because of their proximity to Earth.

There are many applications for GEO satellites, including weather forecasting, satellite radio, and television. Because GEO satellites orbit at such a high altitude, however, there is a longer communication time lag (latency) as the signals travel to and from these satellites. For this reason, many critical communications are handled over LEO satellite networks, which allow for faster connectivity without wires or cables.

However, in general, in the NTN, there may be various different kinds of platforms, including not only satellites but also UAS (Unmanned Aerial System) platforms, examples of which are listed in Table 1 (corresponding Table 4.1-1 of 3GPP TR 38.821, see also 3GPP TR 38.821, Section 4.1, Non-Terrestrial Networks overview):

*Table 1: Types of NTN platforms*

| Platforms | Altitude range | Orbit | Typical beam footprint size |
|---|---|---|---|
| Low-Earth Orbit (LEO) satellite | 300 -1500 km | Circular around the earth | 100-1000 km |
| Medium-Earth Orbit (MEO) satellite | 7000 - 25000 km | | 100-1000 km |
| Geostationary Earth Orbit (GEO) satellite | 35 786 km | notional station keeping position fixed in terms of elevation/azimuth with respect to a given earth point | 200-3500 km |
| UAS platform (including High Altitude Platform Station (HAPS)) | 8 - 50 km (20 km for HAPS) | | 5-200 km |
| High Elliptical Orbit (HEO) satellite | 400 - 50000 km | Elliptical around the earth | 200-3500 km |

For LEO, MEO, and HEO satellites, which do not keep a their position fixed with respect to a given earth point, a satellite beam, which corresponds to a cell or PCI (Physical Cell ID) or to an SSB (Synchronization Signal Block) beam of the NR wireless system may be moving over the earth.

An NTN scenario that provides cells which are continuously moving on the Earth (e.g. a LEO, MEO, or HEO based NTN), is referred to as an earth moving cell scenario. The continuous cell motion on the Earth is due to the operation where the satellite beam is fixed with respect to the NTN platform. Therefore, the footprint of the cell, which may correspond to several satellite beams or one satellite beam, slides on the earth surface with the motion of the NTN platform (e.g. a LEO satellite).

Information about the orbital trajectories of satellites are contained in ephemeris data (or "satellite ephemeris data"). There are different possible representations of ephemeris data, wherein one possibility is to use orbital parameters such as semi-major axis, eccentricity, inclination, right ascension of the ascending node, argument of periapsis, mean anomaly at a reference point in time, and the epoch. The first five parameters can determine an orbital plane (orbital plane parameters), and the other two parameters are used to determine exact satellite location at a time (satellite level parameters). Orbital plane parameters and satellite level parameters are exemplified in Section 7.3.6.1, Representation of Complete Ephemeris Data, of 3GPP TR 38.821 V16.0.0). Another possible option is to provide coordinates of the satellite location (x,y,z), a velocity vector (vx,vy,vz) and a reference point in time.

*Table 2: Elements of Ephemeris*

| Orbital plane parameters | $\sqrt{a}$ | Square root of semi major axis a (semi-major axis) |
|---|---|---|
| | e | Eccentricity (eccentricity) |
| | $i_0$ | Inclination angle at reference time (inclination) |
| | $\Omega_0$ | Longitude of ascending node of orbit plane (right ascension of the ascending node) |
| | $\omega$ | Argument of perigee (argument of periapsis) |
| Satellite level parameters | $M_0$ | Mean anomaly at reference time (true anomaly and a reference point in time) |
| | $t_{0e}$ | Ephemeris reference time (the epoch) |

In an NTN system, several satellites may share a common orbital plane. In such cases, some ephemeris data may be provided for orbital planes rather than for single satellites, to reduce the amount of data. The ephemeris data per orbital plane may be stored in the UE or in the UE's Subscriber Identity Module (SIM). However, for networks with many satellites, the size of ephemeris data can be rather large. Accordingly, rather than storing the ephemeris data, the ephemeris data may at least partially be transmitted from a gNB.

For instance, satellite level orbital parameters for all satellites that may serve a UE may be stored in the UE or in the SIM, and the ephemeris data for each satellite is linked to a satellite ID or index. The satellite ID or index of the serving satellite may then be broadcast in system information so that the UE can find the corresponding ephemeris data in the UE's SIM or storage. Alternatively, satellite level orbital parameters of the serving satellite may be broadcast in system information and UE will derive the position coordinates of the serving satellite. The ephemeris data of the neighboring satellites can also be provided to UE via system information or dedicated RRC signaling. In case the baseline orbital plane parameters are provisioned in the UE or SIM, it may be sufficient to broadcast the mean anomaly at a reference point in time and the epoch need to be broadcast to UE, so that overhead can be reduced.

*Timing advance in NTN*

In 3GPP, a Release 17 work item for the support of Non-Terrestrial Networks (NTN) is still ongoing (see, e.g. 3GPP RP-201256, "WID: Solutions for NR to support non-terrestrial networks (NTN)"). NTN scenarios are characterized by long propagation delays, and UEs should account for them in the **timing advance** when transmitting on the uplink. Timing advance (TA) is a delay used to control the uplink transmission timing of an individual UE. It helps to ensure that uplink transmissions from all UE are synchronized when received by the base station (network node). Already in terrestrial systems, timing advance to be applied at a UE is transmitted from the network node to the particular UE.

The NTN transmission chain is split into two segments: between gateway and satellite (the feeder link), and between satellite and UE (the service link). The delay on the feeder link is referred to as "common delay" because it is the same for any UEs (see, e.g. UE1, UE2, and UE3 of Fig. 8) served by the same NTN entity (e.g. satellite S1). The delay on the feeder link is referred to as "UE-specific delay" as it may vary for the different UEs due to their possibly different locations.

To avoid revealing the physical position of the network node (gNB) to UEs, 3GPP RAN1 decided to signal the feeder link delay as a common timing advance value (see, Section 6.3.4 of 3GPP TR 38.821, v. 1.1.0) especially in architectures as shown in Fig. 6.

Autonomous acquisition of the service link TA at a UE is possible with UE known location and satellite ephemeris. UE own location is typically available to a UE, especially if it can be assumed that a UE has an access to a positioning system, e.g. Global Navigation Satellite System (GNSS) such as a global positioning system (GPS) or the like. Ephemeris data can be made available to the UE as mentioned in some examples above (stored in a SIM and/or obtained from system information signaling or the like).

However, in general, the present disclosure is not limited to fully autonomous determination of service link TA component. Rather, also the acquisition of the service link TA component may be assisted by signaling of a UE specific information to a particular UE. The common TA, which refers to the common component of propagation delay shared by all UEs within the coverage of same satellite beam/cell, may be broadcasted by the network per satellite beam/cell. The calculation of this common TA is conducted by the network with assumption on at least a single reference point per satellite beam/cell.

In other words, in an exemplary scenario, UEs compute the UE-specific delay autonomously since they are assumed to be GNSS-capable. UEs compute the feeder-link delay based on the polynomial for the common TA. The sum of these delays provide the UE with the applicable timing advance value for UL transmissions.

However, it was found that the feeder-link delay may be time-variant, in particular for fast-moving LEO satellites. A single value representing the common TA Imay thus lead to large approximation errors or require very frequent SIB updates resulting. In order to reflect the time variance, the common TA may be represented (approximated), e.g. as a polynomial.

For the 5G-NTN, ways of signaling TA have been discussed in RAN1 (Radio Access Network Working Group 1 of the 3GPP). For example, common TA may be approximated by a polynomial over a certain interval (referred to herein as validity interval) and the coefficients of the polynomial may be transmitted from a network node to one or more UE. It may be possible to transmit the coefficient by broadcasting, as they are common to the UEs served by the same NTN entity (e.g. satellite). UEs then compute the feeder link delay based on the polynomial defined by the received coefficients for the common TA.

One possibility is to take as a particular type of polynomial e.g. Taylor series known from mathematical analysis as a tool to represent a function in the vicinity of a single point as a sum of its derivatives. In particular, the Taylor series represents a function $f(t)$ in the vicinity of time instance $t_0$ in terms of its derivatives $f(t_0)$, $f'(t_0)$, $f''(t_0)$ etc as follows:

$$f(t) = f(t_0) + f'(t_0)(t - t_0) + \frac{f''(t_0)}{2}(t - t_0)^2 + \cdots + \frac{f^{(n)}(t_0)}{n!}(t - t_0)^n \ .$$

Then for instance, the gNB (network node) signals the coefficients $N_{TA,common}(t_0)$, $N'_{TA,common}(t_0)$, $N''_{TA,common}(t_0)$ etc and the UE can compute the common TA $N_{TA,common}(t)$ in the vicinity of $t_0$. The signaled coefficients may correspond to the respective determined derivatives $f(t_0)$, $f'(t_0)$, $f''(t_0)$ etc.

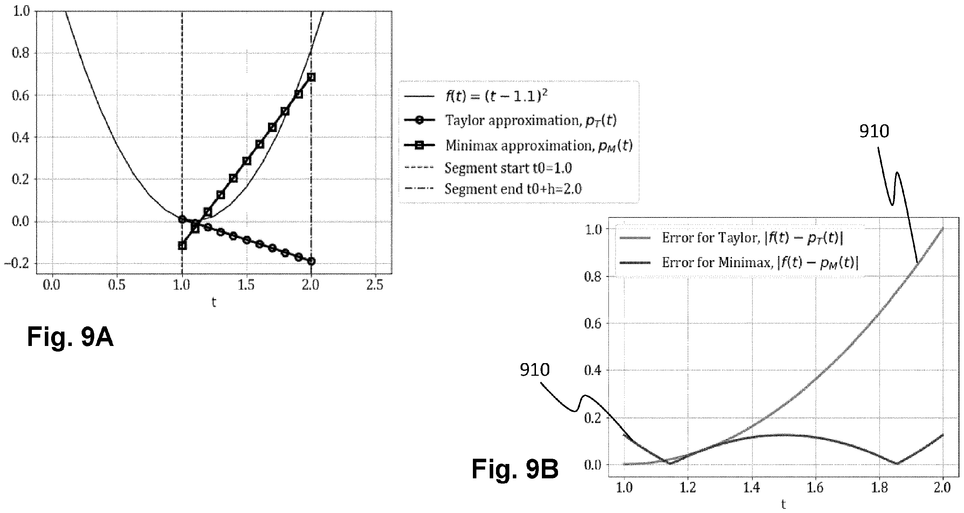

A drawback of this approach is that the Taylor series approximates a target function only at the single point $t_0$ accurately. For example, a problematic situation may arise in a linear approximation of a quadratic function around a point where the function takes an upswing. In such case, a linear equation may point e.g. downwards while the actual function takes an upswing. This simplified scenario of approximating a quadratic function by a linear function is illustrated in Figs. 9A and 9B.

Assuming a simple quadratic function $f(t) = (t - 1.1)^2$, we want to approximate it linearly in the interval $(t_0, t_0 + h) = (1, 2)$, marked by vertical dashed and dot-dashed lines. The Taylor series follows as

$$p_T(t) = 0.01 - 0.2(t - 1)$$

The Taylor series approximates the target function at an inconvenient timing ($t_0 = 1$), where the slope of $f(t)$ is negative, although the function $f(t)$ itself takes an upswing within the interval (1, 2).

Fig. 9B shows an absolute approximation error 910 between the target function and the Taylor series polynomial. As can be seen, the approximation error 910 for the Taylor series grows unconstrained during the considered time interval (1, 2).

There are two possible ways to reduce the approximation error of a Taylor series:

- decreasing the update interval, and/or

- the inclusion of higher-order coefficients.

However, both these approaches lead to an increased overhead, which may be undesirable for some applications.

*Embodiments*

In order to limit the approximation error, in one embodiment, approximation of a common timing advance is based on a polynomial of which coefficients are designed to minimize the maximum approximation error in a given time interval. The approximation error may be given by an absolute difference between the polynomial and the actual common TA value.

In the following, UEs, base stations, and procedures to meet these needs will be described for the new radio access technology envisioned for the 5G mobile communication systems, but which may also be used in LTE mobile communication systems. Different implementations and variants will be explained as well. The following disclosure was facilitated by the discussions and findings as described above and may for example be based at least on part thereof.

In general, it should be noted that many assumptions have been and are made herein so as to be able to explain the principles underlying the present disclosure in a clear, concise and understandable manner. These assumptions are however to be understood as merely examples made herein for illustration purposes that should not limit the scope of the disclosure. A skilled person will be aware that the principles of the following disclosure and as laid out in the claims can be applied to different scenarios and in ways that are not explicitly described herein.

Moreover, some of the terms of the procedures, entities, layers etc. used in the following are closely related to LTE/LTE-A systems or to terminology used in the current 3GPP 5G standardization, even though specific terminology to be used in the context of the new radio access technology for the next 3GPP 5G communication systems is not fully decided yet or might finally change. Thus, terms could be changed in the future, without affecting the functioning of the embodiments. Consequently, a skilled person is aware that the embodiments and their scope of protection should not be restricted to particular terms exemplarily used herein for lack of newer or finally agreed terminology, but should be more broadly understood in terms of functions and concepts that underlie the functioning and principles of the present disclosure.

For instance, a **mobile station** or **mobile node** or **user terminal** or **user device** or **user equipment (UE)** is a physical entity (physical node) within a communication network. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

The term **"base station"** or **"radio base station"** here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB.

The term **Non-terrestrial network, NTN, entity** can be broadly understood as an entity of the non-terrestrial network, such as spaceborne vehicles or airborne vehicles, as introduced in the above section relating to NTN. In the following, satellites will be assumed only as an example for such an NTN entity, while it should remain clear that also the other examples of NTN entities are covered.

For the following embodiments it is exemplarily assumed that the improved timing advance determination is performed as part of a data transmission between the UE, via an NTN entity (e.g. satellite), and a network node. The term **network node** refers to a base station (e.g. gNB) as in Fig. 6 or to another entity with interface to core network (CN), such as the NTN gateway shown in Fig. 7. The scenario already introduced above of Fig. 8 can be referred to exemplarily in the following. For sake of simplifying the explanation, it is exemplarily assumed that the gateway and gNB (forming the network node) are collocated, thus avoiding a possible physical and logical separation of the gateway and the gNB (base station) in the subsequent explanations. Consequently, in the following, the improved timing advance determination will be described as occurring between the UE, the NTN entity, and the gNB, without specifically mentioning that a gateway is located between the NTN entity and the gNB or integrated in the gNB.

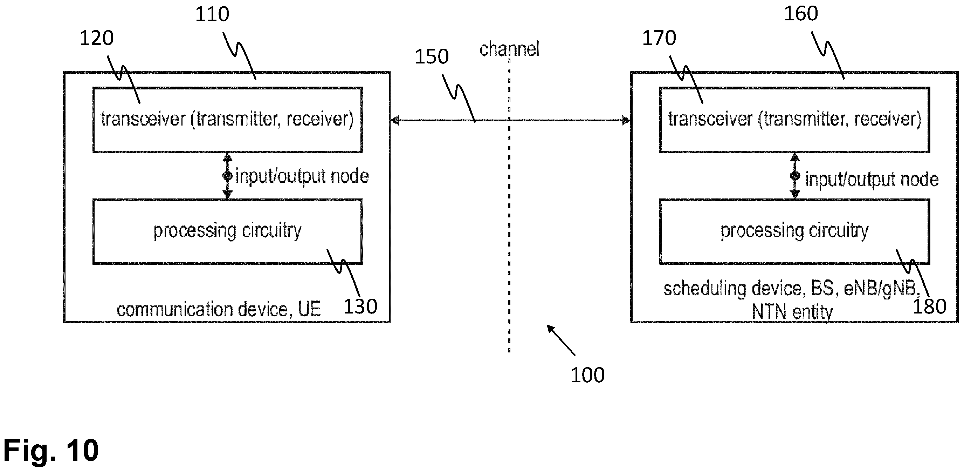

**Fig. 10** illustrates a general, simplified and exemplary block diagram of a user equipment 110 (also termed communication device) and a scheduling device 160 (here exemplarily assumed to be located in the base station, e.g. the eLTE eNB (alternatively termed ng-eNB) or the gNB in 5G NR). The UE 110 and eNB/gNB 160 are communicating with each other over a (wireless) physical channel respectively using the transceiver. The communication is illustrated by an arrow 150. Furthermore, the NTN entity can have the same or similar structure as the scheduling device, e.g. including a transceiver and processing circuitry. Accordingly, the UE 110 and the gNB 160 are part of a communication system 100.

Both devices 110 and 160 may comprise a transceiver 120, 170 and processing circuitry 130, 180. The transceiver 120, 170 in turn may comprise and/or function as a receiver and a transmitter. The processing circuitry 130, 180 may be one or more pieces of hardware such as one or more processors or any LSIs. Between the transceiver and the processing circuitry there is an input/output point (or node) over which the processing circuitry, when in operation, can control the transceiver, i.e. control the receiver and/or the transmitter and exchange reception/transmission data. The transceiver, as the transmitter and receiver, may include the RF (radio frequency) front including one or more antennas, amplifiers, RF modulators/demodulators and the like. The processing circuitry may implement control tasks such as controlling the transceiver to transmit user data and control data provided by the processing circuitry and/or receive user data and control data, which is further processed by the processing circuitry. The processing circuitry may also be responsible for performing other processes such as determining, deciding, calculating, measuring, etc. The transmitter may be responsible for performing the process of transmitting and other processes related thereto. The receiver may be responsible for performing the process of receiving and other processes related thereto, such as monitoring a channel.

Different implementations of an improved transmission procedure will be described in the following. In said connection, improved entities, such as improved UEs, improved NTN entities, and improved base stations are presented, which participate in the improved transmission procedure. Corresponding methods for the UE, NTN entity and BS behavior are provided as well.

According to an embodiment, a network node is provided. The network node may have a similar structure as shown in Fig. 10. The network node 160 comprises processing circuitry 180 and a transceiver 170. The processing circuitry 180 in this embodiment is configured to, for a validity interval, determine coefficients of a polynomial approximating a timing advance component between the network node and a satellite so as to minimize an approximation error. The approximation error is specified in a plurality of time instances of the validity interval relative to a reference time instance. The transceiver 170 then transmits the determined coefficients.

The validity interval may be determined by the network node before determining the coefficients (i.e. predetermined) and indicated to the UEs together with the coefficients. It is also possible to indicate the validity interval separately from the coefficients (and possibly less frequently than signaling coefficients). Such approach enables controlling the accuracy of the approximation e.g. depending on the actual behavior of the timing advance. However, it is conceivable to provide a predefined (fixed) validity interval, e.g. in a standard, without a possibility to configure it by signaling. The present disclosure is not limited to any particular way of obtaining the validity interval at a network node and/or at a user device. Within any validity interval, the approximation employing minimizing of maximum error may improve the efficiency of timing advance signaling.

In general, the timing advance between the network and the UE may be defined by compensation components for a feeder link delay, a service link delay and possibly a network controlled delay or the like. The above mentioned polynomial approximation is applied related to the feeder link part (i.e. between network and satellite). The present disclosure is not limited to any specific approach for determining and/or signaling the service link delay or the network controlled delay.

Apart from selection of an appropriate validity interval length, the approximation error may be further controlled by selecting the degree of the polynomial and the number of time instances in the plurality of time instances. The higher the degree of the polynomial and the higher the number of time instances in which the maximum error minimization is performed, the more accurate may be the approximation.

As will be discussed in more detail below, the reference time instance may be determined relative to some system timing parameter in the same way by the network node and the user device, so that no additional signaling may be necessary. However, in some implementations, it may be advantageous to explicitly signal the reference time instance from the network node to the user device. The validity interval (and the plurality of time instances therein) is determined (specified) relative to the reference time instance. The reference time instance in some embodiments may start the validity interval, and be the first time instance among said plurality of time instances of the validity interval. However, the present disclosure is not limited to such relation between the reference time instance and the validity interval. In general, any other pre-configured relative position of the reference time instance and the validity interval may be supported.

It is noted that the functionality of the above network node may be embedded on an integrated circuitry corresponding in function to the processing circuitry 180 described above. Such processing circuitry controls the transmitter to perform the transmission and/or reception. For example, the circuitry 180 may control a transceiver (such as the transceiver 170) to transmit the determined coefficients. Transmitting the coefficients here generally means conveying the coefficients from the network node to one or more user devices. The coefficients may be indicated in any manner, e.g. encoded relatively to each other or past coefficients or any representation that enables the receiving user devices to recover the coefficients and use them to define the polynomial. Since the common TA component is common for the one or more devices served by the same NTN entity (e.g. satellite), it may be transmitted by way of broadcast such as system information broadcast by the network node or the NTN entity. In the example of Fig. 6, for instance the gNB may transmit the coefficients (over the NTN entity) possibly alongside with further information within a system information block (SIB) defined in the RRC protocol.

Correspondingly to the network node 160 described above, a user device 110 (e.g. such as in Fig. 10) is provided. The user device 110 comprises a transceiver 120 and processing circuitry 130. The transceiver 120 may be configured (e.g. controlled by the processing circuitry 130) to receive coefficients of a polynomial from a network node (e.g. the network node 160 described above). The processing circuitry 130 is configured to determine a timing advance, for a validity interval, for transmission of data to the network node over a satellite based on said polynomial. The polynomial approximates a timing advance component between the network node and a satellite so as to minimize an approximation error. The approximation error is specified in a plurality of time instances of the validity interval relative to a reference time instance. The transceiver 120 is further configured to transmit the data with the determined timing advance.

When referring to data, what is meant is any kind of data such as payload and/or control data. The network node functionality may be implemented by an integrated circuit. Such integrated circuit (similarly to the one mentioned with reference to the network node above) does not need to implement the transceiver. However, it may have a corresponding interface, such as the input/output node in Fig. 10, over which the processing circuitry may control the transceiver to receive and/or transmit data.

Using of the timing advance approximation computation at the network node and user device as described above may provide advantages in terms of reduced error and thus contribute to a better quality and more efficient utilization of system resources.

In an exemplary implementation (of a network node, user device, the corresponding integrated circuits or methods), said polynomial, $p(t)$, has a form of

$$p(t) = c_0 + c_1(t - t_{ref}) + c_2\big(t - t_{ref}\big)^2 + \cdots + c_n\big(t - t_{ref}\big)^n,$$

with $c_0, ..., c_n$ being the coefficients of the polynomial, $n$ being a predefined positive integer degree of the polynomial, and $t_{ref}$ being the reference time instance.

The present disclosure is not limited to any particular approach for minimization of the maximum error. Nevertheless, for practical implementation reasons, the error may be considered (sampled) only in the plurality of discrete time instances of the validity interval. It is noted that the validity interval is the time interval in which the common TA is approximated and thus, in which a particular set of coefficients of the polynomial are valid. This validity interval may correspond to an update interval for which the network signals to the user devices (broadcasts) the particular set of coefficients. When referring to updating herein, what is meant is acquiring new set of coefficients for a following validity interval.

For example, the coefficients of the polynomial may be determined by enforcing that the sign of the approximation error alternates in the plurality of time instances. In an exemplary implementation, the coefficients of the polynomial are determined by solving

$$p(t_i) + (-1)^i E = N_{TA,common}(t_i),$$

with $p(t_i)$ being the polynomial at a time instance $t_i$, $i$ being an integer index of the time instance among said plurality of time instances which are equidistant, $E$ being a value of the approximation error, and $N_{TA,common}(t_i)$ being the actual timing advance component between the network node and the satellite (or in general NTN entity) at a time instance $t_i$ and determined by the network node based on a location of the network node and a location of the satellite. The number of the time instances $t_i$ in said plurality of time instances is larger than the degree of the polynomial.

Thus, in this particular exemplary optimization, the approximation error oscillates between $-E$ and $+E$. This is achieved by the term $(-1)^i$. However, the oscillation may be also implemented differently, e.g. $(-1)^{i+1}$ or in another manner. Moreover, $E$ is the same for all time instances. E is solved for as a variable alongside with the coefficients of the polynomial $p$. It may be advantageous to select the number of the time instances equal to the degree of the polynomial plus two. In this manner, a full-rank system of equations is obtained, which may be solved by any well-known approach to solving (computing) a system of linear equations.

The design of the coefficients $c_0$, $c_1$, $c_2$ etc starts by selecting a number of sampling points $t_i \in (t_{ref}, t_{ref} + h)$ within the validity (update) interval $h$. In this exemplary implementation, $t_{ref}$ is at the start of the validity interval. At these sampling points we require that the polynomial $p(t_i)$ and the actual function $N_{TA,common}(t_i)$ differ by an error $E$ whose sign alternates between sampling points, as given by the above mentioned equation $p(t_i) + (-1)^i E = N_{TA,common}(t_i)$. Based on this equation, a linear equation system can be formulated for different time instances $t_i$ and solved for the polynomial coefficients and the error E.

As a simple example for explanatory purpose, a linear polynomial (of degree one) with two coefficients, $p(t) = c_0 + c_1(t - t_{ref})$, may be approximated at sampling points $t_0 = t_{ref}$, $t_i = t_{ref} + h/2$ and $t_2 = t_{ref} + h$. This results in the following system of linear equations:

The equation system then follows as

$$\begin{pmatrix} 1 & t_0 - t_{ref} & +1 \\ 1 & t_1 - t_{ref} & -1 \\ 1 & t_2 - t_{ref} & +1 \end{pmatrix} \begin{pmatrix} c_0 \\ c_1 \\ E \end{pmatrix} = \begin{pmatrix} N_{TA,common}(t_0) \\ N_{TA,common}(t_1) \\ N_{TA,common}(t_2) \end{pmatrix}$$

which can be simplified to

$$\begin{pmatrix} 1 & 0 & +1 \\ 1 & h/2 & -1 \\ 1 & h & +1 \end{pmatrix} \begin{pmatrix} c_0 \\ c_1 \\ E \end{pmatrix} = \begin{pmatrix} N_{TA,common}(t_{ref}) \\ N_{TA,common}(t_{ref} + \frac{h}{2}) \\ N_{TA,common}(t_{ref} + h) \end{pmatrix}$$

The degree of the polynomial here is one and there are three time instances for which the approximation is computed. We obtain as a result a full rank matrix with linearly independent columns. Solving the equation system yields the coefficients $c_0$ and $c_1$ and the maximum error E. Standard tools of linear algebra, such as Gaussian elimination, LU decomposition or the like, can be used to solve for the coefficients $c_i$ which may then be signaled by the gNB. Thus, a UE can assume that the indicated coefficients minimize the maximum approximation error over the validity period.

It may be possible to further minimize the maximum error E by modifying the sampling points iteratively. In the iterative form such algorithm is known as Remez algorithm. In particular, in a possible implementation, the coefficients resulting from said solving the linear system of equations are modified by applying one or more iterations according to the Remez algorithm.

The Remez algorithm approximates the function $f(t)$ as a polynomial of degree $n$, $p(t) = c_0 + c_1 t + ... + c_n t^n$. The polynomial coefficients are computed iteratively, beginning from a set $T$ of $n + 2$ sampling points $t_0$, $t_1$, $...$, $t_{n+1}$ in the approximation interval. A popular choice for the sampling points are the extrema of the Chebyshev polynomial, linearly mapped to the approximation interval.

The steps of the Remez algorithm are:

1) Set-up and solve the linear system of equations $p(t_i) + (-1)^i E = f(t_i)$ (where $i = 0,1,2,... n + 1$) for the coefficients $c_0$, $c_1$, $...$, $c_n$ and the error value E.

2) Use the coefficients $c_i$ to form a polynomial $p(t)$

3) Find the set $T'$ of local maximum errors $|p(t) - f(t)|$.

4) If the errors at every $t \in T'$ are of equal magnitude and alternate in sign, then $p(t)$ is the minimax approximation polynomial. Otherwise replace $T$ with $T'$ and repeat the steps above.

The result is called the polynomial of best approximation or the minimax approximation algorithm.

A numerically challenging aspect of the Remez algorithm is given by step 3, the identification of the local maximum errors for a function $f$ which itself can only be numerically evaluated.

However, it is noted that results provided by once calculating the system of equations mentioned above may already provide for sufficiently accurate results, so that iterations are not necessary. Iterations may improve the accuracy, but may also increase the complexity. Thus, with regard to a particular application the Remez algorithm with or without iterations may be used.

In the above example, the plurality of time instances $t_i$ do not need to be equidistantly distributed in the validity interval. Nevertheless, equidistant location provides for a simple and efficient solution.

Turning back to Figs. 9A and 9B, it can be seen that the approach of computing the polynomial coefficients by minimizing the maximum approximation error ma provide more accurate results over the validity interval. By applying the above mentioned system of equations to the example of Fig. 9A, the Minimax polynomial $p_M(t)$ is obtained:

$$p_M(t) = -0.115 + 0.8(t - 1).$$

The corresponding linear "minimax" approximation $p_M(t)$ of the quadratic function $f(t)$ is shown in Fig. 9A. It can be seen that the minmax approximation $p_M(t)$ comes closer to the shape of the parable $f(t)$ than the Taylor approximation $p_T(t)$ discussed above. The error of the minimax polynomial is confined to an amplitude of $E = 0.125$. The error amplitude $E$ results as a consequence of the number of coefficients (the more coefficients, the smaller $E$).

Fig. 9B shows the approximation error value $E$ for the Taylor approximation (curve 910) and for the minmax approximation (curve 920). While the error for the Taylor series grows unconstrained due to the different slopes at the point of approximation, the minimax approximation confines the error within the update period to a maximum level that is not exceeded. It is fair to note that at the sampling point of the Taylor series (here $t_0 = 1$) the approximation error is zero, while the minimax polynomial shows a non-zero error. However, this benefit of the Taylor series at a singular sampling point is outweighed by the minimax small approximation error over the complete sampling interval.

In the following, some specific exemplary implementations for acquiring the common TA are provided. The following exemplary implementations are combinable with any of the above mentioned embodiments and examples.

A first and a second exemplary implementations concern obtaining of the reference time instance (at the network node and/or the user device).

According to a first exemplary implementation regarding the reference time instance acquisition, the transceiver 170 of the network node 160 transmits an indication of the reference time instance. The transceiver may be controlled by the processing circuitry 180 to perform the transmission. The present disclosure is not limited to any particular kind of transmission. For example, the indication of the reference time instance may be transmitted together with other signaling data such as the coefficients and/or the validity interval or the like.

In the 5G/NR system, it may be advantageous to transmit the indication of the reference time instance within a system information, as it is common for the UEs served by a particular NTN entity. As mentioned above, one or more of said coefficients and/or an indication of the reference time instance and/or an indication of the validity interval may be conveyed within the system information.

For instance, the following information element SIB_NTN ma be provided in the RRC definition of a system information block (SIB) that may carry NTN configuration parameters.

```
SIB_NTN = SEQUENCE {
    CTA_0 INTEGER(...,...) // Constant term
    CTA_1 INTEGER(...,...) // Linear term
    CTA_2 INTEGER(...,...) // Quadratic term
    CTA_N INTEGER(...,...) // N-th term
    CTA_T1 INTEGER(...,...) // Epoch time
    CTA_h INTEGER(...,...) // Validity period
    ... // ephemeris data
}
```

Acronym CTA stands for common timing advance. Parameters CTA_0, CTA_1, CTA_2, ..., CTA_N indicate respective N+1 coefficients of the CTA approximation polynomial with features described above (determined by minimax). It is noted that N is a positive integer. It may be predefined (fixed) of configurable. The configuration of N may be carried in the same element SIB_NTN or may be signaled separately and possibly less frequently than the coefficients.

Parameter CTA_T1 carries the indication of the reference time instance, which may be also referred to as epoch time. For example, the CTA_T1 may be signaled explicitly, e.g. in a format like UTC (indicating the absolute time and provided e.g. by GPS). Another example may be an implicit format like a counter of slots, frames and/or system frames. In other words, the CTA_T1 may be signaled relatively to a system timing and/or in some system time units.

Moreover, parameter CTA_h denotes the validity interval. The validity interval may be indicated by its length (in time domain) or by means of its frequency per some predefined time unit. The SIB_NTN may include further configuration parameters for configuring the NTN communication. As indicated exemplarily in the above syntax, some ephemeris data may be also provided in the SIB_NTN.

SIB_NTN may be transmitted like any other system information, e.g. within a system information block, e.g. periodically according to a scheduling information, as described above.

In this first embodiment, CTA_0(=$c_0$), CTA_1(=$c_1$), .., CTA_N(=$c_N$) are coefficients designed to minimize the maximum approximation error over the validity period (interval) CTA_h. They are also valid during the validity period CTA_h. Validity means that they can be used by a user device to approximate the CTA for the validity period. In this first embodiment, the epoch time is explicitly signaled as CTA_T1. The validity period of CTA_h in this example starts from CTA_T1. For any arbitrary time t during the validity period, the user device may calculate the CTA $N_{TA,common}(t)$ as follows:

$$N_{TA,common}(t) = CTA\_0 + CTA\_1(t - CTA\_T1) + \cdots + CTA\_N(t - CTA\_T1)^N.$$

It is noted that the calculation above is only exemplary. In general, the elements of the SIB_NTN do not have to be directly used for the calculation. For example, the SIB_NTN elements may carry the coefficients and the indication of the epoch time in an encoded manner or in a representation that is not suitable for direct use in the equation. In such case the coefficients and the epoch time need to be first recovered (determined based on the SIB_NTN elements) and then used in the equation.

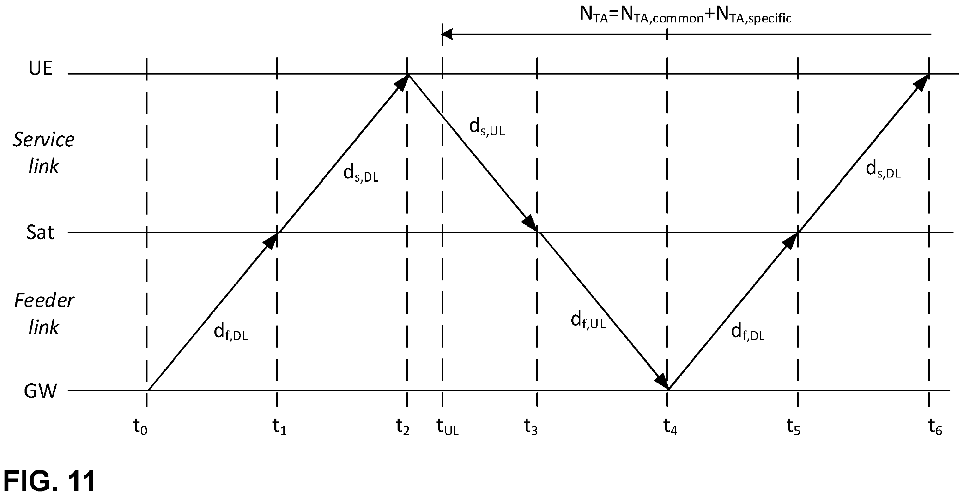

Fig. 11 illustrates an exemplary uplink (UL) and downlink (DL) frame timing between gNB/GW, satellite and user device. In the following, some general TA aspects are described with reference to Fig. 11. It is noted that the general concept of TA has been known in mobile communication systems for some time. The following description is to provide some explanation and background. However, the present disclosure is not limited to the following and may work with TA as currently understood in standardization and literature.

At time $t_0$ the gNB transmits a polynomial $p(t)$ describing the common TA which consists of the feeder-link delay on the uplink and downlink, $d_{f,UL}$ and $d_{f,DL}$. The satellite relays the DL signal at time $t_1$ to the UE. The UE receives the DL signal at time $t_2$. We assume that at time $t_2$ the UE is provided with the reference time (here $t_0$), the polynomial coefficients, the satellite ephemeris and its own position on ground (via GNSS). This data is sufficient for the UE to compute the timing advance (TA) value $N_{TA}$. The uplink transmission timing is obtained by subtracting the TA value from the DL reception timing, i.e., $t_{UL} = t_2 - N_{TA}$.

It is noted that this description of time advance is exemplary and simplified and may differ from the practice, in particular from the 5G. For example, in praxis, SIB transmission timing ($t_0$) and the reference timing (epoch time) are not necessarily identical, as also noted in other parts and examples of the present disclosure.

The UL transmission timing $t_{UL}$ may not precede the reception of the DL signal by which it is controlled, so it shall be applied for future uplink transmissions.

During the subsequent times $t_3$ through $t_6$, the UE completes one round-trip round (corresponding to a round-trip delay of $t_6$-$t_2$). The UE determines the UL transmission timing as $t_{UL} = t_6 - N_{TA}$. Transmitting the UL signal at $t_{UL}$ ideally facilities a reception of the UL signal at the gNB (here also referred to as gateway, GW) in good proximity of $t_4$, i.e., the time when the gNB sends the DL signal.

It is noted that there the present TA description is simplified. There may be further time offset(s) in practice, such as a Koffset that may be indicated by the network to a UE. The UE may derive $t_6$ from Koffset as indicated to the UE(s) by the gNB. *The $N_{TA}$ should then be determined according to (gNB) RTT during $t_0$ and $t_4$ so as to match the target reception timing at gNB ($t_4$).* Let us consider as an example the delay $d_{f,DL}$ between gateway and satellite in forward direction, given by $d_{f,DL} = \frac{1}{c_0}\left\| p_{GW}(t_0) - p_{SAT}(t_0 + d_{f,DL}) \right\|$ . The rationale is that the gNB emits the DL signal at a time $t_0$ and the signal propagates $d_{f,DL}$ seconds until it arrives at the satellite at a time $t_0 + d_{f,DL}$. The satellite is moving between the time of transmission $t_0$ and the time of reception $t_0 + d_{f,DL}$. Similarly, by replacing $t_0 = t_1 - d_{f,DL}$ we obtain the feeder link delay for the DL in backward direction, $d_{f,DL} = \frac{1}{c_0}\left\| p_{GW}(t_1 - d_{f,DL}) - p_{SAT}(t_1) \right\|$ . The last equation places the satellite at a position equivalent to the time $t_1$, and its solution $d_{f,DL}$ reveals where the gNB must have been positioned, i.e., at a position equivalent to $t_1 - d_{f,DL}$.

The table below lists equations for all four segments in forward and backward direction. These equations may be solved e.g. numerically (e.g. iteratively). Approaches to do so are known from prior art.

| Segment | Forward direction | Backward direction |
|---|---|---|
| DL, gNB-SAT | $d_{f,DL}^{fwd}(t_0) = \frac{1}{c_0}\left\| p_{GW}(t_0) - p_{SAT}\left(t_0 + d_{f,DL}^{fwd}(t_0)\right) \right\|$ $t_1 = t_0 + d_{f,DL}^{fwd}(t_0)$ | $d_{f,DL}^{bwd}(t_1) = \frac{1}{c_0}\left\| p_{GW}\left(t_1 - d_{f,DL}^{bwd}(t_0)\right) - p_{SAT}(t_1) \right\|$ $t_0 = t_1 - d_{f,DL}^{bwd}(t_1)$ |
| DL, SAT-UE | $d_{s,DL}^{fwd}(t_1) = \frac{1}{c_0}\left\| p_{SAT}(t_1) - p_{UE}\left(t_1 + d_{s,DL}^{fwd}(t_1)\right) \right\|$ $t_2 = t_1 + d_{s,DL}^{fwd}(t_1)$ | $d_{s,DL}^{bwd}(t_2) = \frac{1}{c_0}\left\| p_{SAT}\left(t_2 - d_{s,DL}^{bwd}(t_2)\right) - p_{UE}(t_2) \right\|$ $t_1 = t_2 - d_{s,DL}^{bwd}(t_2)$ |

(continued)

| Segment | Forward direction | Backward direction |
|---|---|---|
| UL, UE-SAT | $$d_{s,UL}^{fwd}(t_2) = \frac{1}{c_0}\left\|p_{UE}(t_2) - p_{SAT}\big(t_2 + d_{s,UL}^{fwd}(t_2)\big)\right\|$$ $$t_3 = t_2 + d_{s,UL}^{fwd}(t_2)$$ | $$d_{s,UL}^{bwd}(t_3) = \frac{1}{c_0}\left\|p_{UE}\big(t_3 - d_{s,UL}^{bwd}(t_3)\big) - p_{SAT}(t_3)\right\|$$ $$t_2 = t_3 - d_{s,UL}^{bwd}(t_3)$$ |
| UL, SAT-gNB | $$d_{f,UL}^{fwd}(t_3) = \frac{1}{c_0}\left\|p_{SAT}(t_3) - p_{GW}\big(t_3 + d_{f,UL}^{fwd}(t_3)\big)\right\|$$ $$t_4 = t_3 + d_{f,UL}^{fwd}(t_3)$$ | $$d_{f,UL}^{bwd}(t_4) = \frac{1}{c_0}\left\|p_{SAT}\big(t_4 - d_{f,UL}^{bwd}(t_4)\big) - p_{GW}(t_4)\right\|$$ $$t_3 = t_4 - d_{f,UL}^{bwd}(t_4)$$ |

Conceptually, the delays on feeder link $d_f$ and service link $d_s$ are comprised of the two components in DL and UL, i.e., $d_f = d_{f,DL} + d_{f,UL}$ and $d_s = d_{s,DL} + d_{s,UL}$. In particular, the idea is to model the common TA as follows

$$N_{TA,common}(t) = d_{f,DL}^{bwd}(t) + d_{f,UL}^{bwd}(t - d_{f,DL}^{bwd}(t))$$

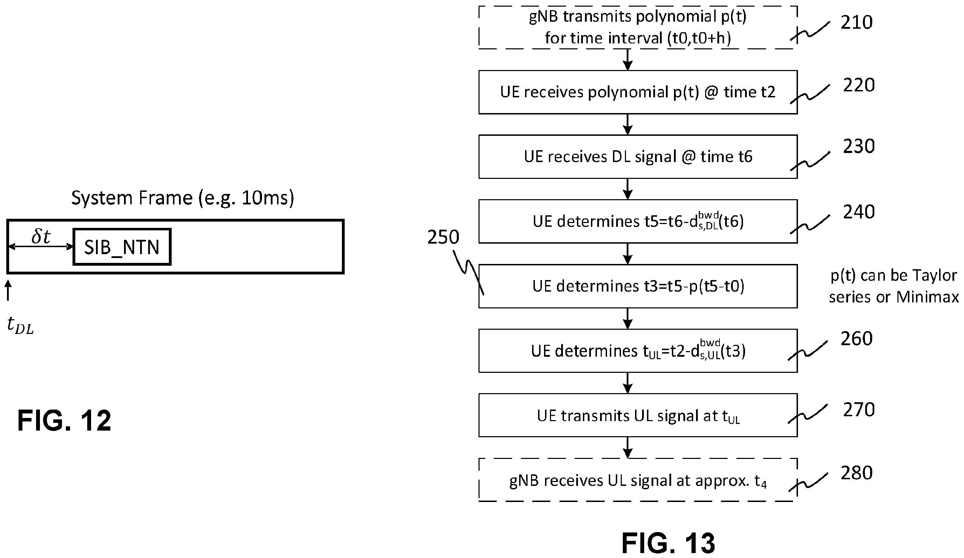

With reference to Fig. 11, in the following the UE procedure for timing advance is briefly described. The procedure is further illustrated schematically in Fig. 13. As already described above, the gNB transmits the polynomial p(t) for the time interval $(t_0, t_0+h)$ in step 210. The US receives the polynomial p(t) at the time instance $t_2$ in step 220.

The UE then (in step 230) receives the DL signal at time $t_6$. Based on its GNSS-capacity and the satellite ephemeris, UE can compute $d_{s,DL}^{bwd}(t_6)$ in step 240 and, hence, UE knows when the DL signal was relayed by the satellite, e.g.:

$$t_5 = t_6 - d_{s,DL}^{bwd}(t_6).$$

The UE can derive the feeder link delay as $N_{TA,common}(t_5)$ and thus knows when the UL signal is relayed by the satellite. Ideally, the UE would know the common TA $N_{TA,common}(t)$. Then the corresponding timing is computed as $t_3 = t_5 - N_{TA,common}(t_5)$. In practice, the UE knows only a polynomial approximation of the common TA as discussed above, i.e., $N_{TA,common}(t) \cong p(t - t_0)$. Hence, the UE estimates the time when the UL signal must be relayed by the satellite in step 250 as follows

$$t_3 = t_5 - p(t_5 - t_0).$$

Based again on GNSS-data and satellite ephemeris data, the UE can compute the delay on the UL $d_{s,UL}^{bwd}(t_3)$ and obtains in step 260 the UL timing via:

$$t_{UL} = t_3 - d_{s,UL}^{bwd}(t_3).$$

Ideally, $t_{UL} = t_2$. However, the common TA $N_{TA,common}(t)$ is provided to the UE as a polynomial, so that in general equality holds only approximately $t_{UL} \cong t_2$. Once the UE has determined the UL transmission timing and transmitted the uplink signal in 270 accordingly, the UL frames should arrive in good alignment with the DL frames at the gNB (in step 280) which are transmitted in this example at time $t_4$. We can model this as

$$t_{UL} + d_{s,UL}^{fwd}(t_{UL}) + d_{f,UL}^{fwd}\left(t_{UL} + d_{s,UL}^{fwd}(t_{UL})\right) \cong t_4$$

The residual timing error is estimated as

$$e = \left| t_{UL} + d_{s,UL}^{fwd}(t_{UL}) + d_{f,UL}^{fwd}\left(t_{UL} + d_{s,UL}^{fwd}(t_{UL})\right) - t_4 \right|.$$

The above described timing advance mechanism is applicable to any of the embodiments and examples described above or in the following.

According to a second exemplary implementation regarding the reference time instance acquisition, the epoch time (the reference time instance) does not need to be signaled and is not signaled between the network and the user device. In particular, the SIB_NTN may still be transmitted, but it does not contain the CTA_T1 element, as shown below:

```
SIB_NTN = SEQUENCE {
    CTA_0 INTEGER(...,...) // Constant term
    CTA_1 INTEGER(...,...) // Linear term
    CTA_2 INTEGER(...,...) // Quadratic term
    CTA_N INTEGER(...,...) // N-th term
    CTA_h INTEGER(...,...) // Validity period
    ... // ephemeris data
}
```

At both or any of, the network node and the user device, the processing circuitry 130 and/or 180 may be configured to determine the reference time instance based on a timing of the transmission (e.g. uplink and/or downlink transmission timing) of the system information.

For example, the reference time instance is determined based on at least one of the following reference points:

-    a starting point of a system information window in which the system information (e.g. SIB_NTN) is transmitted. The UE (as receiving entity) can derive the starting point from the SIB reception timing, i.e. from the timing with which the UE received the SIB_NTN in the downlink.

-    a starting point of a system frame number (SFN) of a frame in which the system information is transmitted. System frame number may be signaled in MIB.

-    a starting point of a frame in which the system information is transmitted.

-    a system information timing and a predefined offset relative to the reference time instance. This option is illustrated in Fig. 12.

For example, the reference point can be directly one of the following:

-    the starting point of the system information (SI) window in which the SIB_NTN is transmitted.

-    the starting point of the SFN in which the SIB_NTN is transmitted.

-    the starting point of the frame in which the SIB_NTN is transmitted.

-    SIB_NTN timing minus delta_t ($\delta t$). Delta_t ($\delta t$) in this example is a fixed offset (relative to) starting from the reference time instance.

Fig. 12 shows a system frame with a duration of 10 ms (which is a typical system frame duration e.g. in 5G). The term "system frame" means that the frame is defined for the data transmissions in the communication system (e.g.

by standard). SIB_NTN is transmitted in a certain position (e.g. given by subframe and/or slot and/or symbol) within the system frame which is given by an offset $\delta t$ from the beginning $t_{DL}$ of the system frame.

With the above definition of reference point, the UE can derive the reference time instant (epoch time) in the same way as the gNB. For example, the UE uses relative timing $\tau$ ($\tau$ is relative timing to the reference time instance) to compute $N_{TA,common}$ as follows:

$$\mathrm{N_{TA,common}}(\tau) = \mathrm{CTA\_0} + \mathrm{CTA\_1}\left(\tau + d_{s,DL}\right) + .. + \mathrm{CTA\_N}(\tau + d_{s,DL})^N.$$

Here, $\tau$ is UE's data transmission timing and $d_{s,DL}$ is computed from the satellite location and the UE location as mentioned above. The parameters CTA_0(=$c_0$), CTA_1(=$c_1$) etc. are calculated for the reference time instance $t_1$, i.e., the satellite is the reference position as shown in Fig. 11. The reference time instance $t_1$ is the time instance in which the satellite transmits the downlink signal to the UE. The delay on this service link is $d_s$. In this way, the UE can compute $t_1$ from the reference point derived based on DL reception timing minus $d_s$. The validity period holds from $t_1$ for the duration of CTA_h(=$h$).

It is noted that the in the first and the second exemplary implementations the reference time instance may be $t_0$, $t_1$, or any value between $t_0$ and $t_1$. In general, the closer the approximation is to the UE the smaller the achievable error may be. $t_1$ may thus be preferable for some implementations, since it reduces the approximation error. On the other hand, $t_0$, may have some benefits for gNB implementation.

In summary, the reference time instance in this second embodiment may be determined based on reception time of the system information and a service link delay between the satellite and the user device.

In the following, a third, a fourth, a fifth, and a sixth exemplary implementations are described which concern frequency of transmitting the SIB_NTN with the coefficients (and possibly epoch time and/or the validity interval configuration) and the validity of such coefficients.

According to the third exemplary implementation, after determining the coefficients, multiple repetitions of system information including the determined coefficients and the indication of the reference time instance are transmitted during the validity interval.

Since the same coefficients are repeated multiple times during one validity period, it is advantageous to also provide in the SIB_NTN the timing reference (reference time instance) explicitly. Otherwise, the UE would not know which of the SIB_NTNs it received during the validity periods. In this third exemplary implementation, SIB_NTN is signaled more frequently than the coefficients are updated. In other words, the reading of the updated coefficients (and possibly also other elements) from the SIB_NTN at the UE side is less frequent than the SIB_NTN transmission period. The period with which the gNB transmits the coefficients is smaller than the period with which a UE updates the coefficients.

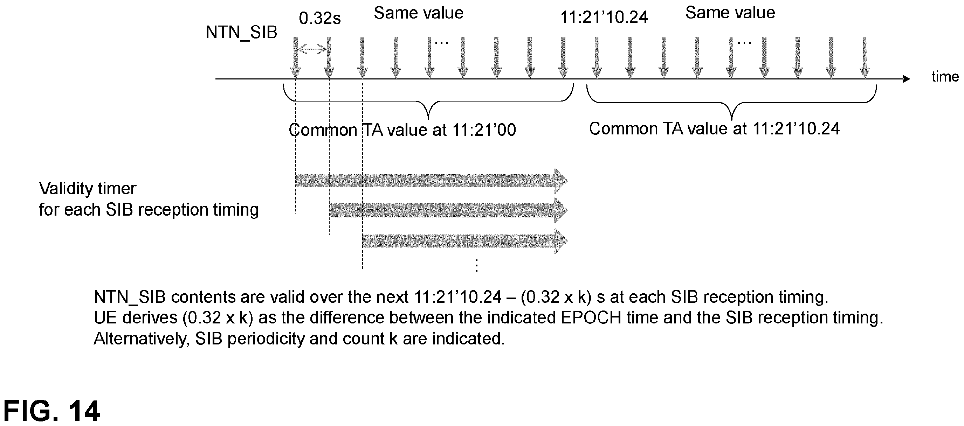

Fig. 14 illustrates an example in which system information embeds SIB_NTN frequently, e.g., every 0.32s (corresponds to 32 frames), but the UE updates SIB_NTN contents only according to the validity interval, which is longer, e.g. 10.24 s (corresponds to 1024 frames, i.e. one cycle of system frame number). Thus, a first common TA value is updated at 11:21'00 and maintained until the next update at 11:21'10.24. During the validity interval, the repetitions of the coefficients are transmitted by the gNB 10.24/0.32 = 32 times.

In Fig. 14, SIB_NTN contents are valid over the next 10.24 - (0.32 x k) s at each SIB reception timing k. A UE derives (0.32 x k) as the difference between the indicated epoch time and the SIB reception timing. Alternatively, SIB periodicity and count k may be configured explicitly by gNB (e.g. within system information). In the example of Fig. 14, k may have any value from 1 to 9. For instance, if a UE received fifth repetition of the SIB_NTN, it has to update (read again) the SIB_NTN in 10.24-(0.32 x 5) = 8.64 s. If, on the other hand, a UE received 20th repetition of the SIB_NTN, it has to update (read again) the SIB_NTN in 10.24-(0.32 x 20) = 3.84 s. This is illustrated in Fig. 14 by the horizontal arrows with different length corresponding to the remaining time after which the UE has to update the coefficients. The validity timer value is derived from the time difference between SIB reception timing and the epoch time indicated in the SIB_NTN.

One of the advantages of this approach is that idle UEs can quickly connect, whereas connected UEs may updated system information with a lower frequency.

Accordingly, in this exemplary implementation, the user device processing circuitry may be configured to:

- if the user device is in a connected state, control the transceiver to receive system information with a period corresponding to the validity interval; and

- if the user device is in an idle mode, control the transceiver to receive system information in one of multiple repetitions of system information transmitted during the validity interval together with the indication of the reference time instance.

According to the fourth exemplary implementation, the validity interval corresponds to (or equals to) a system information period, and the system information period is a period with which the coefficients are determined and transmitted within the system information.

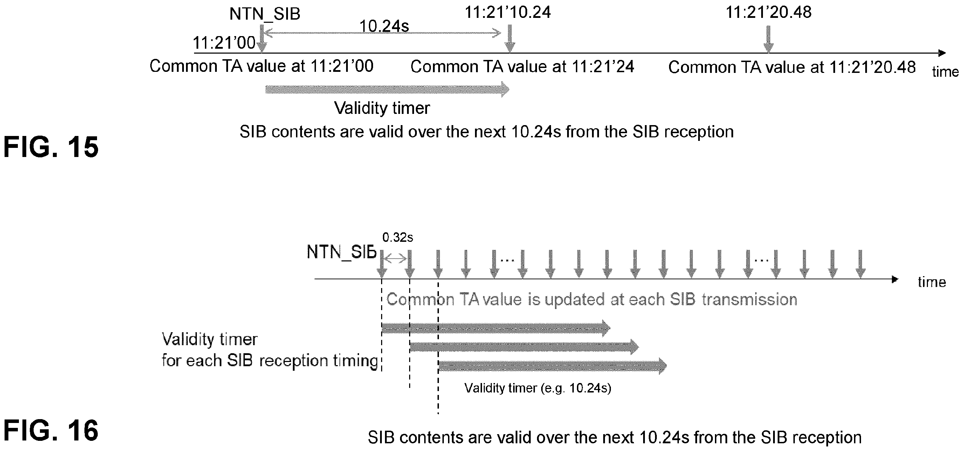

This is illustrated in Fig. 15. As can be seen in the figure, signaling the SIB_NTN and updating the SIB_NTN by the UE coincide. The period with which the gNB transmits the coefficients is the same as the period with which a UE updates the coefficients. In this case, epoch time may be indicated implicitly to the UE, e.g. by the position of the SIB_NTN (see the second exemplary implementation above).

In the example of Fig. 15, system information embeds SIB_NTN every, e.g., 10.24s, and UE reads and updates the SIB_NTN also every 10.24s. This approach may be simpler than the third exemplary implementation. On the other hand, large indication periods may increase latencies for the connecting UEs (e.g. UEs in idle mode). One of the advantages of this approach is that the epoch time indication is not necessary.

According to the fifth exemplary implementation, the system information includes coefficients determined for a first validity interval and coefficients determined for a second validity interval having a length and/or the reference time instance different from the first validity interval.

For example, a SIB_NTN contains two sets of CTA parameters with different validity periods, e.g., one for 0s-5.12s and one for 0s-10.24s.

In the third exemplary implementation as illustrated in Fig. 14, when a UE obtains SIB_NTN at one or two SIB transmission periods before the expiration (e.g. 11:21'10.24 - 0.32 s in the example of Fig. 14), the UE needs to obtain the NTN-SIB again very soon. By sending two sets of coefficients, such frequent SIB reading can be avoided. There may be two sets of coefficients or more than two sets of coefficients.

According to the sixth exemplary implementation the validity interval is longer than a system information period. Moreover, the system information period is a period with which the coefficients are determined and transmitted within the system information together with the indication of the reference time instance.

Fig. 16 illustrates such an example. Validity periods may overlap as indicated by the horizontal arrows. In this example, the validity periods have the same length of 10.24s. The gNB signals SIB_NTN more frequently (here every 0.32s) than a UE is required to read SIB_NTN (here every 10.24s). Each signaled SIB_NTN in this example includes updated coefficients. Thus, other than in the third exemplary embodiment (Fig. 14), the coefficients are not repeated, but updated by the gNB with every SIB_NTN transmission. A UE may read the SIB_NTN at any time and update the coefficients (and correspondingly the TA). However, it is only required to actually read (receive) a SIB_NTN after the validity of the last received SIB_NTN expired (here after 10.24 s from the reception). The epoch time (the reference time instance) is signaled explicitly to UE (see the first exemplary implementation regarding epoch time signaling).

The examples presented with reference to Figs. 14 to 16 apply particular validity interval length and particular SIB update timings. However, the present disclosure is not limited to these merely exemplary timings. As is clear to those skilled in the art, the particular time intervals may be longer or shorter as those presented herein.

*Illustrative simulation results*

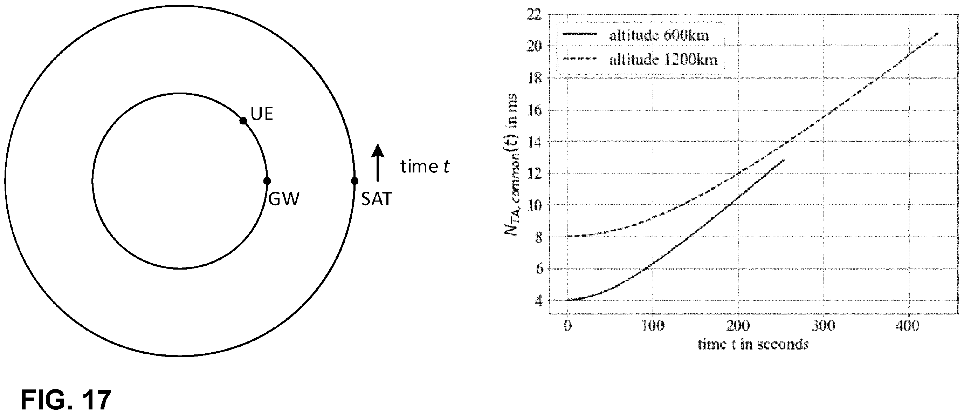

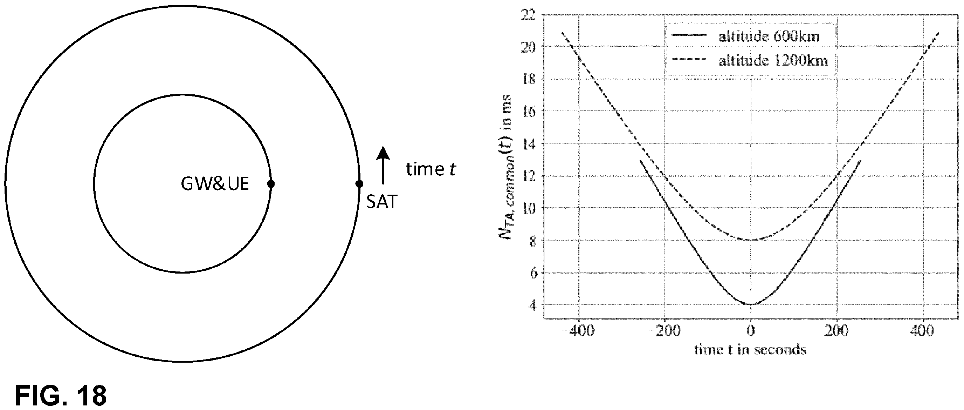

In the following a case study is provided to illustrate performance of the common TA determination as described herein, assuming coefficients obtained by applying minimization of maximum error to determine its approximation. Studies is a constellation with a gateway (gNB, network node), a satellite, and a single UE in two different initial positions. We assume that at time t=0, the satellite is directly above the gateway. In Case 1 (Fig. 17, left hand side) the satellite is visible from the UE under an elevation angle of 10° at t=0. In Case 2 (Fig. 18, left hand side), gateway and UE are co-located at the same position corresponding to an elevation angle of 90°. The satellite advances on its orbit until the minimum elevation angle of 10° towards the gateway is reached. The corresponding common timing advance value $N_{TA,common}(t)$ is shown in Fig. 17 and Fig. 18 (right hand side) for two satellite altitudes (600km, 1200km). For the numerical results the steps outlined with reference to Figs.11 and 13 were implemented as Python code. First, we determine the time axis or the visibility window during which the satellite is visible from both gateway and satellite (assuming a minimum elevation angle of 10°). Second, the visibility window is segmented into non-overlapping update periods. These are the same-size time intervals $(t_0, t_0 + h)$ which appear throughout this disclosure. For each interval, we compute a polynomial representing $N_{TA,common}(t)$ which is then employed during all respective time intervals by the UE to derive its uplink timing.

The above mentioned timing error is obtained:

$$e = \left| t_{UL} + d_{s,UL}^{fwd}(t_{UL}) + d_{f,UL}^{fwd}\left(t_{UL} + d_{s,UL}^{fwd}(t_{UL})\right) - t_4 \right|.$$

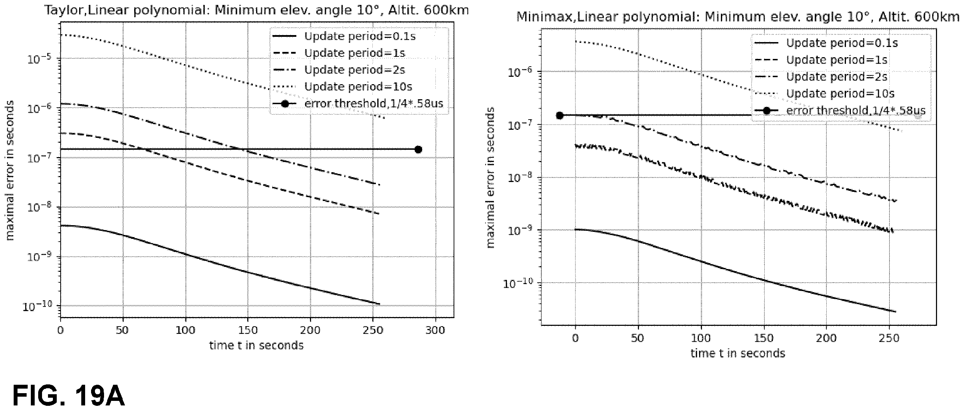

This error is shown in Figs. 19A-19B for each update interval, for the Taylor series and the Minimax approach, and for linear and quadratic polynomials. The error was calculated via a global optimization algorithm called Differential Evolution, which is a stochastic and robust algorithm and does not require a derivative to work.

Case 1

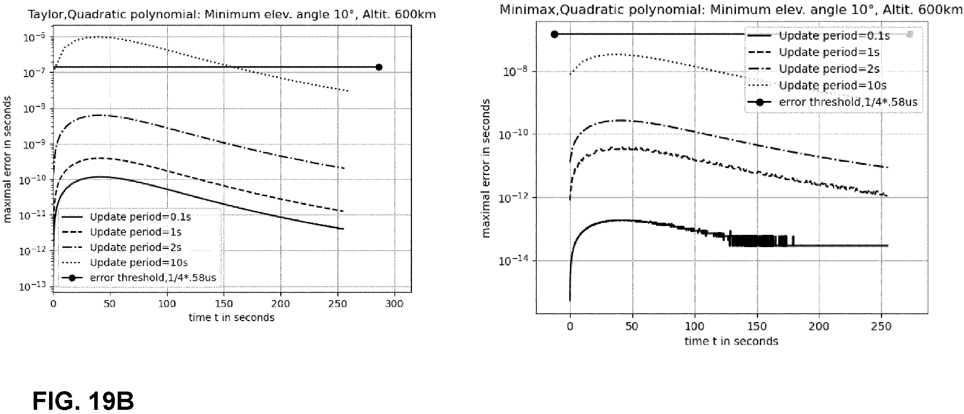

We have considered four update periods 0.1, 1.0, 2.0, and 10.0 seconds. The graph on the left-hand side of Figs. 19A-19D shows results for the Taylor series, the graph on the right hand side of Figs. 19A-19D shows the results for the Minimax polynomial. There is horizontal line in each of the figures shown, marked as error threshold ¼*0,58us which marks a quarter of the most stringent cyclic prefix in 5G-NR for PUSCH. Fig. 19A shows linear interpolation, and Fig. 19B shows quadratic interpolation.

In Fig. 19A (linear polynomial), the largest approximation error occurs at time t=0. The error behavior of Minimax outperforms the Taylor approach by half an order of magnitude. We see that the Taylor series requires a sub-second update interval to affect an error below our target threshold, while the Minimax approach the error threshold only at a 2 second update interval.

In Fig. 19B (quadratic polynomial), the error performance improves overall. However, the error performance of the minimax approach is easily one order of magnitude improved over the Taylor series. Also, the Minimax approach allows to stay under the target error threshold with an update interval of 10 seconds while the Taylor series clearly suffers.

It is noted that the jagged behavior of some error curves can be explained by the stochastic nature of the Differential Evolution algorithm operating at rather small numerical values.

Case 2

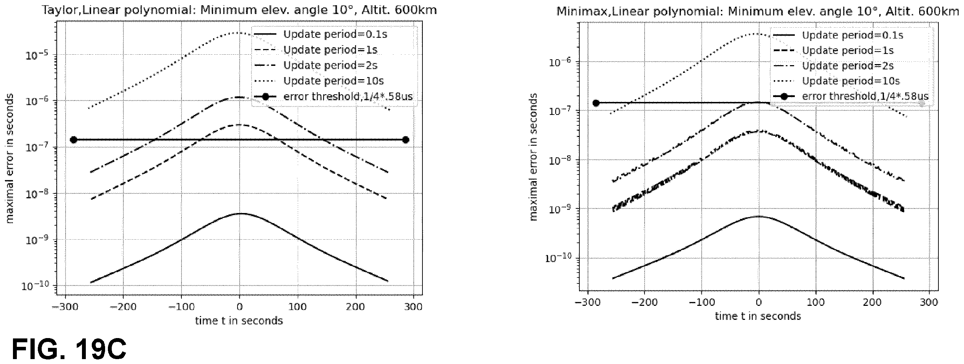

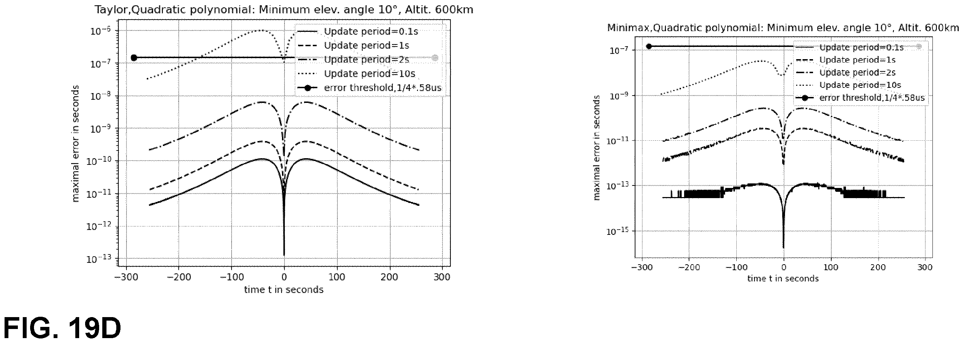

The setup for Case 2 (GW and UE positions coincide) is shown in Fig. 18. The outcome is similar as for Case 1. In particular, Fig. 19C shows the approximation error for update periods 0.1, 1.0, 2.0, and 10.0 seconds and the linear polynomial coefficients, whereas Fig. 19D shows approximation error for the same update periods and quadratic polynomial coefficients.

In summary, a generalized polynomial with coefficients designed by applying minimization of maximum error as described above may yield significantly smaller approximation errors over all update intervals in comparison with e.g. Taylor series. The benefits compared to the Taylor series may thus be less signaling overhead and/or possible larger update periods for the coefficients.

The present disclosure can be realized by software, hardware, or software in cooperation with hardware. Each functional block used in the description of each embodiment described above can be partly or entirely realized by an LSI (large scale integration) such as an integrated circuit (IC), and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

*Summary of embodiments*

A network node is provided in the present disclosure. The network node comprises processing circuitry which, in operation, for a validity interval, determines coefficients of a polynomial approximating a timing advance component between the network node and a satellite so as to minimize an approximation error. The approximation error is specified in a plurality of time instances of the validity interval relative to a reference time instance. The network node further comprises a transceiver which, in operation, transmits said coefficients.

The network node may be a base station. It may also embody satellite gateway functionality.

For example, said polynomial, $p(t)$, has a form of

$$p(t) = c_0 + c_1(t - t_{ref}) + c_2(t - t_{ref})^2 + \cdots + c_n(t - t_{ref})^n,$$

with $c_0, ..., c_n$ being the coefficients of the polynomial, $n$ being a predefined positive integer degree of the polynomial, and $t_{ref}$ being the reference time instance.

In some exemplary implementations, the processing circuitry, in operation, determines the coefficients of the polynomial by enforcing that the sign of the approximation error alternates in the plurality of time instances.

In particular, the processing circuitry, in operation, determines the coefficients of the polynomial by solving

$$p(t_i) + (-1)^i E = N_{TA,common}(t_i),$$

with $p(t_i)$ being the polynomial at a time instance $t_i$, $i$ being an integer index of the time instance among said plurality of time instances which are equidistant, E being a value of the approximation error, and $N_{TA,common}(t_i)$ being the timing advance between the network node and a satellite at a time instance $t_i$ and determined by the network node based on a location of the network node and a location of the satellite. The number of the time instances $t_i$ in said plurality of time instances is larger than the degree of the polynomial.

For example, the coefficients resulting from said solving may be modified by applying one or more iterations according to a Remez algorithm.

According to an exemplary implementation, the transceiver, in operation, transmits an indication of the reference time instance.

For example, the transceiver, in operation, transmits said coefficients and/or an indication of the reference time instance and/or an indication of the validity interval within system information.

In some implementations, it is not necessary to transmit the indication of the reference time instance. For example, in some implementations, the processing circuitry, in operation, determines the reference time instance based on a timing of the transmission of the system information.

According to a first implementation, the validity interval corresponds to a system information period, and the system information period is a period with which the coefficients are determined and transmitted within the system information.

According to a second implementation, after determining the coefficients, multiple repetitions of system information determined coefficients and the indication of the reference time instance are transmitted during the validity interval.

According to a third implementation, the validity interval is longer than a system information period, and the system information period is a period with which the coefficients are determined and transmitted within the system information together with the indication of the reference time instance.

According to a fourth implementation, the system information includes coefficients determined for a first validity interval and coefficients determined for a second validity interval having a length and/or the reference time instance different from the first validity interval.

A user device is provided in the present disclosure. The user device (user equipment) comprises a transceiver which, in operation, receives coefficients of a polynomial from a network node; and processing circuitry which, in operation:

determines a timing advance, for a validity interval, for transmission of data to the network node over a satellite based on said polynomial, wherein the polynomial approximates a timing advance component between the network node and a satellite so as to minimize an approximation error. The approximation error is specified in a plurality of time instances of the validity interval relative to a reference time instance. The transceiver, in operation, also transmits the data with the determined timing advance.

In the user device, for example, the transceiver, in operation, receives an indication of the reference time instance.

In some implementations, the transceiver of the user device, in operation, receives said coefficients and/or an indication of the reference time instance and/or an indication of the validity interval within system information.

As mentioned above with reference to the network node, it may not be necessary for the user device to actually receive the indication of the reference time instant. In some implementations, the processing circuitry of the user device, in operation, determines the reference time instance based on a timing of the transmission of the system information.

Regarding the reference time instance determination, there are many implementations possible. For example, at the user device, the processing circuitry, in operation, determines the reference time instance based on at least one of:

- a starting point of a system information window in which the system information is transmitted;

- starting point of a system frame number of a frame in which the system information is transmitted;

- starting point of a frame in which the system information is transmitted;

- system information timing and a predefined offset relative to the reference time instance.

In a first implementation the validity interval corresponds to a system information period, and the system information period is a period with which the coefficients are determined and transmitted within the system information.

In a second implementation at the user device side, the processing circuitry, in operation: if the user device is in a connected state, controls the transceiver to receive system information with a period corresponding to the validity interval; and if the user device is in an idle mode, controls the transceiver to receive system information in one of multiple repetitions of system information transmitted during the validity interval together with the indication of the reference time instance.

In a third implementation the validity interval is longer than a system information period, and the system information period is a period with which the coefficients are updated and transmitted within the system information together with the indication of the reference time instance.

In a fourth implementation the system information includes coefficients determined for a first validity interval and coefficients determined for a second validity interval having a length and/or the reference time instance different from the first validity interval, and

the processing circuitry, in operation, determines whether to apply coefficients determined for the first validity interval or coefficients determined for the second validity interval based on a time until the expiry of the first validity interval and/or the second validity interval.

In another possible implementation, at the network node or at the user device, the reference time is determined based on reception time of the system information, and a service link delay between the satellite and the user device.

Correspondingly to the above mentioned network node and user device and the related further examples and implementations, the present disclosure provides the corresponding methods to be executed by a network node and the user device or by their processing circuitries.

A method is provided in the present disclosure that can be executed in a network node. The method comprises for a validity interval, determining coefficients of a polynomial approximating a timing advance component between the network node and a satellite so as to minimize an approximation error. The approximation error is specified in a plurality of time instances of the validity interval relative to a reference time instance. The method may further comprise transmitting said coefficients (e.g. when the method is executed on a network device). The method may comprise providing to a transmitter said coefficients for transmission (if the method is executed by a processing circuitry of the network device or of a corresponding integrated circuit).

A method is provided in the present disclosure that can be executed by a user device. The method comprises receiving coefficients of a polynomial from a network node; determining a timing advance, for a validity interval, for transmission of data to the network node over a satellite based on said polynomial, wherein the polynomial approximates a timing advance component between the network node and a satellite so as to minimize an approximation error, wherein the approximation error is specified in a plurality of time instances of the validity interval relative to a reference time instance; and transmitting the data with the determined timing advance.

Further exemplary embodiments and implementations of the methods are provided by the steps performed in operation by the above described processing circuitry of the network node and/or the user device.

It is noted that the method may be also executed on the processing circuitry of the user device or by an integrated circuit. In such case, instead of the reception and transition steps the method includes providing to a transceiver (or merely to an output) data for (wireless) transmission and obtaining from a transceiver (or merely at an input) data (e.g. the coefficients).

In the present disclosure, an integrated circuit (IC) is provided which in operation, for a validity interval, determines coefficients of a polynomial approximating a timing advance component between the network node and a satellite so as to minimize an approximation error. The approximation error is specified in a plurality of time instances of the validity interval relative to a reference time instance. The IC further comprises an output to which the determined coefficients are provided. Such output may be in practical implementations be connectable or connected with a transceiver which would then perform the transmission.

In the present disclosure, an integrated circuit (IC) is provided. The IC in operation determines a timing advance, for a validity interval, for transmission of data to the network node over a satellite based on a polynomial, wherein the polynomial approximates a timing advance component between the network node and a satellite so as to minimize an approximation error. The approximation error is specified in a plurality of time instances of the validity interval relative to a reference time instance. The polynomial may be obtained (received) at an input of the IC (e.g. from a transceiver). The IC may further has an output to which the data are provided with the determined timing advance for transmission e.g. by a transceiver.

The present disclosure further provides program code which when executed on one or more processors causes the one or more processors to execute any of the methods mentioned above. The program code may be stored on a non-transitory medium.

The present disclosure provides a communication system which includes the network node as described above and one or more user devices as described above. It may further comprise one or more NTN entities.

**Claims**

1. A network node comprising:

    processing circuitry which, in operation:

        for a validity interval, determines coefficients of a polynomial approximating a timing advance component between the network node and a satellite so as to minimize an approximation error, wherein the approximation error is specified in a plurality of time instances of the validity interval relative to a reference time instance; and

    a transceiver which, in operation, transmits said coefficients.

2. The network node according to claim 1, wherein said polynomial, $p(t)$, has a form of

$$p(t) = c_0 + c_1(t - t_{ref}) + c_2\left(t - t_{ref}\right)^2 + \cdots + c_n\left(t - t_{ref}\right)^n,$$

    with $c_0, ..., c_n$ being the coefficients of the polynomial, $n$ being a predefined positive integer degree of the polynomial, and $t_{ref}$ being the reference time instance.

3. The network node according to claim 1 or 2, wherein the processing circuitry, in operation, determines the coefficients of the polynomial by enforcing that the sign of the approximation error alternates in the plurality of time instances.

4. The network node according to claim 3, wherein the processing circuitry, in operation, determines the coefficients of the polynomial by solving

$$p(t_i) + (-1)^i E = N_{TA,common}(t_i),$$

    with $p(t_i)$ being the polynomial at a time instance $t_i$, $i$ being an integer index of the time instance among said plurality of time instances which are equidistant, $E$ being a value of the approximation error, the approximation error oscillating between $-E$ and $+E$, and $N_{TA,common}(t_i)$ being the timing advance between the network node and a satellite at a time

instance $t_i$ and determined by the network node based on a location of the network node and a location of the satellite, wherein the number of the time instances $t_i$ in said plurality of time instances is larger than the degree of the polynomial.

5. The network node according to claim 4, wherein the coefficients resulting from said solving are modified by applying one or more iterations according to a Remez algorithm.

6. The network node according to any of claims 1 to 5, wherein the transceiver, in operation, transmits an indication of the reference time instance.

7. The network node according to any of claims 1 to 5, wherein the transceiver, in operation, transmits said coefficients and/or an indication of the reference time instance and/or an indication of the validity interval within system information.

8. The network node according to claim 7, wherein the processing circuitry, in operation, determines the reference time instance

   based on a timing of the transmission of the system information and/or
   based on at least one of:

   - a starting point of a system information window in which the system information is transmitted;
   - starting point of a system frame number of a frame in which the system information is transmitted;
   - starting point of a frame in which the system information is transmitted;
   - system information timing and a predefined offset relative to the reference time instance..

9. The network node according to claim 7 or 8, wherein

   the validity interval corresponds to a system information period, and
   the system information period is a period with which the coefficients are determined and transmitted within the system information.

10. The network node according to claim 7 or 8, wherein
    after determining the coefficients, multiple repetitions of system information including the determined coefficients and the indication of the reference time instance are transmitted during the validity interval.

11. The network node according to claim 7 or 8, wherein

    the validity interval is longer than a system information period, and
    the system information period is a period with which the coefficients are determined and transmitted within the system information together with the indication of the reference time instance.

12. The network node according to claim 7 or 8, wherein
    the system information includes coefficients determined for a first validity interval and coefficients determined for a second validity interval having a length and/or the reference time instance different from the first validity interval.

13. A user device comprising:

    a transceiver which, in operation, receives coefficients of a polynomial from a network node;
    processing circuitry which, in operation:
    determines a timing advance, for a validity interval, for transmission of data to the network node over a satellite based on said polynomial, wherein the polynomial approximates a timing advance component between the network node and a satellite so as to minimize an approximation error, wherein the approximation error is specified in a plurality of time instances of the validity interval relative to a reference time instance;
    wherein the transceiver, in operation, transmits the data with the determined timing advance.

14. A method for execution by a network node, comprising:

    for a validity interval, determines coefficients of a polynomial approximating a timing advance component between the network node and a satellite so as to minimize an approximation error,

wherein the approximation error is specified in a plurality of time instances of the validity interval relative to a reference time instance; and
transmitting said coefficients.

15. A method for execution by a user device, comprising:

receiving coefficients of a polynomial from a network node;
determining a timing advance, for a validity interval, for transmission of data to the network node over a satellite based on said polynomial, wherein the polynomial approximates a timing advance component between the network node and a satellite so as to minimize an approximation error, wherein the approximation error is specified in a plurality of time instances of the validity interval relative to a reference time instance; and
transmitting the data with the determined timing advance.

**Fig. 1**

**Fig. 2**

**Fig. 3**

**Fig. 4**

Fig. 5

Fig. 6

Fig. 7

S2

ISL

S1

Service
Link

Feeder
Link

UE1

UE2

UE3

NTN
gateway

gNB

Fig. 8

EP 4 178 279 A1

**Fig. 9A**

**Fig. 9B**

EP 4 178 279 A1

160
170 transceiver (transmitter, receiver)
input/output node
processing circuitry
180
scheduling device, BS, eNB/gNB, NTN entity

150 channel

100

110
120 transceiver (transmitter, receiver)
input/output node
processing circuitry
130
communication device, UE

Fig. 10

FIG. 11

EP 4 178 279 A1

System Frame (e.g. 10ms)

$\delta t$

SIB_NTN

$t_{DL}$

## FIG. 12

gNB transmits polynomial p(t)
for time interval (t0,t0+h) — 210

UE receives polynomial p(t) @ time t2 — 220

UE receives DL signal @ time t6 — 230

UE determines $t5 = t6 - d_{s,DL}^{bwd}(t6)$ — 240

250

UE determines $t3 = t5 - p(t5-t0)$

p(t) can be Taylor
series or Minimax

UE determines $t_{UL} = t2 - d_{s,UL}^{bwd}(t3)$ — 260

UE transmits UL signal at $t_{UL}$ — 270

gNB receives UL signal at approx. $t_4$ — 280

## FIG. 13

NTN_SIB contents are valid over the next 11:21'10.24 – (0.32 x k) s at each SIB reception timing.
UE derives (0.32 x k) as the difference between the indicated EPOCH time and the SIB reception timing.
Alternatively, SIB periodicity and count k are indicated.

FIG. 14

NTN_SIB          11:21'10.24                    11:21'20.48

11:21'00 |←——————— 10.24s ———————→| ↓                              ↓

Common TA value at 11:21'00     Common TA value at 11:21'24     Common TA value at 11:21'20.48   time

|══════════════════════════════▶|
Validity timer
SIB contents are valid over the next 10.24s from the SIB reception

**FIG. 15**

         0.32s
NTN_SIB |←→| ↓  ↓  ↓  ↓ ... ↓  ↓  ↓  ↓  ↓  ↓  ... ↓  ↓  ↓
                                                                    time

Common TA value is updated at each SIB transmission

Validity timer          |══════════════════▶|
for each SIB reception timing  |══════════════════▶|
                                   |══════════════════▶|
                                   Validity timer (e.g. 10.24s)

**FIG. 16**          SIB contents are valid over the next 10.24s from the SIB reception

EP 4 178 279 A1

FIG. 17

EP 4 178 279 A1

FIG. 18

Minimax,Linear polynomial: Minimum elev. angle 10°, Altit. 600km

Taylor,Linear polynomial: Minimum elev. angle 10°, Altit. 600km

FIG. 19A

FIG. 19B

Minimax,Linear polynomial: Minimum elev. angle 10°, Altit. 600km

Update period=0.1s
Update period=1s
Update period=2s
Update period=10s
error threshold,1/4*.58us

maximal error in seconds

time t in seconds

Taylor,Linear polynomial: Minimum elev. angle 10°, Altit. 600km

Update period=0.1s
Update period=1s
Update period=2s
Update period=10s
error threshold,1/4*.58us

maximal error in seconds

time t in seconds

FIG. 19C

FIG. 19D

EP 4 178 279 A1

Europäisches
Patentamt

European
Patent Office

Office européen
des brevets

# EUROPEAN SEARCH REPORT

Application Number

EP 21 20 6801

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ERICSSON: "On UL time and frequency synchronization enhancements for NTN", 3GPP DRAFT; R1-2109928, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. e-Meeting; 20211011 – 20211019 1 October 2021 (2021-10-01), XP052058846, Retrieved from the Internet: URL:https://ftp.3gpp.org/tsg_ran/WG1_RL1/TSGR1_106b-e/Docs/R1-2109928.zip R1-2109928 On UL time and frequency synchronization enhancements for NTN.docx [retrieved on 2021-10-01] | 1,2, 13-15 | INV. H04W56/00 |
| A | * the whole document * | 3-12 | |

-----

**TECHNICAL FIELDS SEARCHED (IPC)**

H04W

The present search report has been drawn up for all claims

| Place of search | Date of completion of the search | Examiner |
|---|---|---|
| The Hague | 4 April 2022 | Larcinese, Annamaria |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

**Non-patent literature cited in the description**

- Study on New Radio (NR) to support non-terrestrial networks. *3GPP TR 38.811*

- Solutions for NR to support non-terrestrial networks. *3GPP TR 38.821*